(19) Europäisches Patentamt
European Patent Office
Office européen des brevets

(11) EP 3 575 444 A1

(12) EUROPEAN PATENT APPLICATION
published in accordance with Art. 153(4) EPC

(43) Date of publication:
04.12.2019 Bulletin 2019/49

(21) Application number: 18744190.2

(22) Date of filing: 26.01.2018

(51) Int Cl.:
C25B 15/00 (2006.01)        C25B 1/08 (2006.01)
C25B 9/00 (2006.01)         C25B 9/20 (2006.01)
C25B 11/03 (2006.01)        C25B 11/08 (2006.01)

(86) International application number:
PCT/JP2018/002579

(87) International publication number:
WO 2018/139609 (02.08.2018 Gazette 2018/31)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD TN

(30) Priority: 26.01.2017 JP 2017012544

(71) Applicant: Asahi Kasei Kabushiki Kaisha
Tokyo 1000006 (JP)

(72) Inventors:
• NAKAJIMA, Yasuhiro
  Tokyo 101-0006 (JP)
• FUJIMOTO, Norikazu
  Tokyo 100-0006 (JP)
• HIRANO, Toshiyuki
  Tokyo 100-0006 (JP)

(74) Representative: dompatent von Kreisler Selting
Werner -
Partnerschaft von Patent- und Rechtsanwälten
mbB
Deichmannhaus am Dom
Bahnhofsvorplatz 1
50667 Köln (DE)

(54) BIPOLAR ELECTROLYTIC CELL, BIPOLAR ELECTROLYTIC VESSEL, AND METHOD FOR MANUFACTURING HYDROGEN

(57) An objective is to increase energy conversion efficiency and suppress increase in electrolyte temperature in alkaline water electrolysis performed using a bipolar electrolytic cell having a zero-gap structure. A bipolar electrolytic cell for alkaline water electrolysis has a zero-gap structure in which a plurality of elements including an anode and a cathode are stacked with a membrane interposed therebetween, and in which the membrane is in contact with the anode and the cathode. In the zero-gap structure, a heat release coefficient Ha (K/sec) of the anode defined by formula (1) and a heat release coefficient Hc (K/sec) of the cathode defined by formula (2) have a difference $\Delta H$ ($|Ha - Hc|$) of 12 K/sec or less, and the membrane has a linear expansion coefficient of not less than $0.5 \times 10^{-5}$ (1/K) and not more than $5.0 \times 10^{-5}$ (1/K).

*FIG. 2*

**Description**

TECHNICAL FIELD

The present disclosure relates to a bipolar electrolytic cell, a bipolar electrolyzer, and a hydrogen production method.

BACKGROUND

In recent years, techniques utilizing renewable energy, such as wind power generation and solar power generation, have attracted attention in order to address issues including global warming due to greenhouse gases such as carbon dioxide, decreasing fossil fuel reserves, and so on.

The nature of renewable energy is that it is subject to very large fluctuation as its output depends on climatic conditions. It is thus not always possible to transport electric power obtained through electricity generation by renewable energy to the general electric power system, and there is concern about social influences such as imbalance of electricity supply and demand, electric power system destabilization, and so on.

Therefore, research is being conducted in relation to converting electric power generated from renewable energy into a form suitable for storage and transportation, and then utilizing the electric power in this form. Specifically, studies have been made on how to generate storable and transportable hydrogen by electrolysis of water using electric power generated from renewable energy, and to use hydrogen as an energy source or material.

Hydrogen is widely used industrially in the fields of, for example, petroleum refining, chemical synthesis, and metal refining, and in recent years the potential for use in hydrogen stations for fuel cell vehicles (FCVs), smart communities, hydrogen power plants, and so forth has been expanding. Accordingly, there is high expectation for the development of technology for obtaining hydrogen, in particular, from renewable energy.

Methods for electrolysis of water include solid polymer electrolyte water electrolysis, high-temperature steam electrolysis, and alkaline water electrolysis. Of these, alkaline water electrolysis is regarded as one of the most promising because of its industrialization over decades, capability for large-scale implementation, and inexpensiveness as compared to other water electrolysis devices.

However, in order to adopt alkaline water electrolysis as a means for storing and transporting energy in the future, it is necessary to enable efficient and stable water electrolysis using electric power with large fluctuation in output as described above, and various issues associated with electrolytic cells and devices for alkaline water electrolysis need to be resolved.

In order to address an issue of improving electric power consumption in hydrogen production by suppressing the bath voltage in alkaline water electrolysis, it is known to be effective to use an electrolytic cell structure referred to as a zero-gap structure, which is a structure in which gaps between a membrane and electrodes are substantially eliminated (refer to Patent Literature (PTL) 1 and 2). With the zero-gap structure, by enabling rapid escape of produced gas through pores in an electrode to the side opposite to the membrane side of the electrode, it is possible to reduce the distance between electrodes while minimizing gas accumulation near the electrodes, and thereby maintain a low bath voltage. The zero-gap structure is very effective in suppressing bath voltage and is adopted in various electrolysis devices.

CITATION LIST

Patent Literature

    PTL 1: US 4,530,743 A
    PTL 2: JP S59-173281 A

SUMMARY

(Technical Problem)

However, when devices having the zero-gap structures described in PTL 1 and 2 are operated under a variable power supply or the like, such as renewable energy, there are cases in which membrane cracking or tearing occurs.

Accordingly, an objective of the present disclosure is to provide a bipolar electrolytic cell for alkaline water electrolysis that is resistant to membrane cracking and tearing even when operated under a variable power supply such as renewable energy.

(Solution to Problem)

The inventors conducted extensive studies to ascertain the mechanism by which this membrane cracking and tearing occurs. The inventors discovered that membrane cracking and tearing is caused by concentration of stress in part of the membrane due to a difference between an anode and a cathode in terms of heat release associated with passing of current and a difference in heat capacity since variation in power supplied to an electrolytic cell when a variable power supply is used leads to a proportional change in heat release dependent on the overvoltage, resistance, and so forth.

The present disclosure is directed toward the provision of a method for solving this problem and has the following primary features.

[1] A bipolar electrolytic cell comprising a zero-gap structure in which a plurality of elements including an anode and a cathode are stacked with a membrane interposed therebetween, and in which the membrane is in contact with the anode and the cathode, wherein
in the zero-gap structure, a heat release coefficient Ha (K/sec) of the anode defined by formula (1) and a heat release coefficient Hc (K/sec) of the cathode defined by formula (2) have a difference ΔH, expressed by |Ha - Hc|, of 12 K/sec or less,

$$(1) \qquad Ha = (I \times \eta a) \div (Ca \times Da)$$

$$(2) \qquad Hc = (I \times \eta c) \div (Cc \times Dc)$$

where:

I is a current density of 6 kA/m$^2$;
$\eta$a is anode overvoltage (mV) at a current density of 6 kA/m$^2$;
$\eta$c is cathode overvoltage (mV) at a current density of 6 kA/m$^2$;
Ca is specific heat (J/kg·K) of the anode;
Cc is specific heat (J/kg·K) of the cathode;
Da is area density (kg/m$^2$) of the anode; and
Dc is area density (kg/m$^2$) of the cathode, and
the membrane has a linear expansion coefficient of not less than $0.5 \times 10^{-5}$ (1/K) and not more than $5.0 \times 10^{-5}$ (1/K).

[2] A bipolar electrolytic cell for alkaline water electrolysis comprising a zero-gap structure in which a plurality of elements including an anode and a cathode are stacked with a membrane interposed therebetween, and in which the membrane is in contact with the anode and the cathode, wherein
in the zero-gap structure, a heat release coefficient Ha (K/sec) of the anode defined by formula (1) and a heat release coefficient Hc (K/sec) of the cathode defined by formula (2) have a difference ΔH, expressed by |Ha - Hc|, of 12 K/sec or less,

$$(1) \qquad Ha = (I \times \eta a) \div (Ca \times Da)$$

$$(2) \qquad Hc = (I \times \eta c) \div (Cc \times Dc)$$

where:

I is a current density of 6 kA/m$^2$;
$\eta$a is anode overvoltage (mV) at a current density of 6 kA/m$^2$;
$\eta$c is cathode overvoltage (mV) at a current density of 6 kA/m$^2$;
Ca is specific heat (J/kg·K) of the anode;
Cc is specific heat (J/kg·K) of the cathode;

Da is area density (kg/m$^2$) of the anode; and
Dc is area density (kg/m$^2$) of the cathode, and
the membrane has a linear expansion coefficient of not less than $0.5 \times 10^{-5}$ (1/K) and not more than $5.0 \times 10^{-5}$ (1/K).

[3] The bipolar electrolytic cell according to the foregoing [1] or [2], wherein the heat release coefficient Ha is 2.0 K/sec or less.

[4] The bipolar electrolytic cell according to any one of the foregoing [1] to [3], wherein the heat release coefficient Hc is 5.0 K/sec or less.

[5] The bipolar electrolytic cell according to any one of the foregoing [1] to [4], wherein the heat release coefficient Ha and the heat release coefficient Hc have a sum ∑H, expressed by Ha + Hc, of 0.5 K/sec or more.

[6] The bipolar electrolytic cell according to any one of the foregoing [1] to [5], wherein at least one of the anode and the cathode includes a metal porous body.

[7] The bipolar electrolytic cell according to any one of the foregoing [1] to [6], wherein the anode overvoltage ηa is larger than the cathode overvoltage ηc.

[8] The bipolar electrolytic cell according to any one of the foregoing [1] to [7], wherein the cathode includes openings and has an open fraction of not less than 40% and not more than 70%.

[9] The bipolar electrolytic cell according to any one of the foregoing [1] to [8], wherein a surface of the cathode is coated with a layer containing at least one platinum group element selected from the group consisting of Ru, Rh, Pd, Os, Ir, and Pt.

[10] The bipolar electrolytic cell according to any one of the foregoing [1] to [9], wherein the anode includes openings and has an open fraction of not less than 30% and not more than 70%.

[11] The bipolar electrolytic cell according to any one of the foregoing [1] to [10], wherein the membrane is a porous membrane having a thickness of not less than 60 μm and not more than 600 μm.

[12] The bipolar electrolytic cell according to the foregoing [11], wherein the membrane has a thermal conductivity of not less than 0.01 W/m·K and not more than 1.0 W/m·K.

[13] A bipolar electrolyzer comprising the bipolar electrolytic cell according to any one of the foregoing [1] to [12].

[14] A hydrogen production method comprising producing hydrogen through water electrolysis of water containing alkali with an electrolyzer including an electrolytic cell, wherein

the electrolytic cell has a structure in which an anode and a cathode are stacked with a membrane interposed therebetween, and in which the membrane is in contact with the anode and the cathode,

in the structure, a heat release coefficient Ha (K/sec) of the anode defined by formula (1) and a heat release coefficient Hc (K/sec) of the cathode defined by formula (2) have a difference ∆H, expressed by |Ha - Hc|, of 12 K/sec or less,

$$(1) \qquad Ha = (I \times \eta a) \div (Ca \times Da)$$

$$(2) \qquad Hc = (I \times \eta c) \div (Cc \times Dc)$$

where:

I is a current density of 6 kA/m$^2$;
ηa is anode overvoltage (mV) at a current density of 6 kA/m$^2$;
ηc is cathode overvoltage (mV) at a current density of 6 kA/m$^2$;
Ca is specific heat (J/kg·K) of the anode;
Cc is specific heat (J/kg·K) of the cathode;
Da is area density (kg/m$^2$) of the anode; and
Dc is area density (kg/m$^2$) of the cathode, and
the membrane has a linear expansion coefficient of not less than $0.5 \times 10^{-5}$ (1/K) and not more than $5.0 \times 10^{-5}$ (1/K).

The electrolytic cell may be the bipolar electrolytic cell according to any one of the foregoing [1] to [12], and the electrolyzer may be the bipolar electrolyzer according to the foregoing [13].

(Advantageous Effect)

A bipolar electrolytic cell for alkaline water electrolysis according to the present disclosure is resistant to membrane cracking and tearing, even when operated under a variable power supply such as renewable energy, as a result of being configured as set forth above.

BRIEF DESCRIPTION OF THE DRAWINGS

In the accompanying drawings:

FIG. 1 is a side view generally illustrating an example of a bipolar electrolyzer including a bipolar electrolytic cell for alkaline water electrolysis according to a present embodiment;
FIG. 2 is a cross-sectional view that with respect to a bipolar electrolyzer including a bipolar electrolytic cell for alkaline water electrolysis according to a present embodiment, illustrates the inside of the electrolytic cell in a part indicated by a dashed quadrilateral border in FIG. 1;
FIG. 3 is a plan view illustrating an example of an external header-type bipolar element that is a constituent of a bipolar electrolytic cell for alkaline water electrolysis according to a present embodiment;
FIG. 4 illustrates an outline of an electrolysis device used in examples and comparative examples; and
FIG. 5 illustrates an outline of a bipolar electrolyzer used in an electrolysis test.

DETAILED DESCRIPTION

The following provides a detailed description of an embodiment of the present disclosure (hereinafter, referred to as the "present embodiment"). However, the present disclosure is not limited to the following embodiment and may be implemented with various alterations that are within the essential scope thereof.

(Electrolyzer for alkaline water electrolysis)

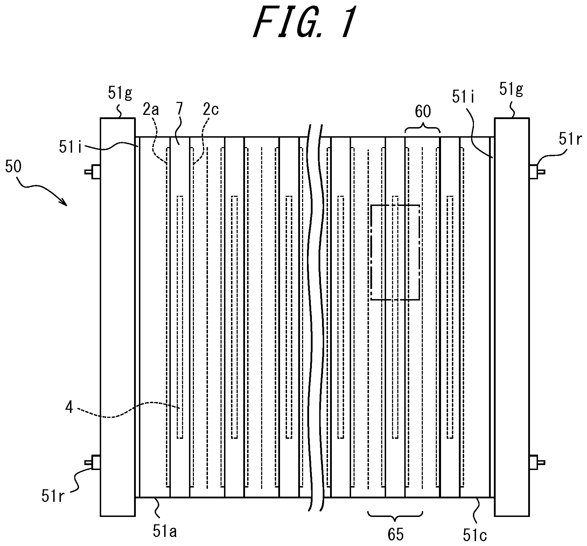

FIG. 1 is a side view generally illustrating an example of a bipolar electrolyzer including a bipolar electrolytic cell for alkaline water electrolysis according to the present embodiment.

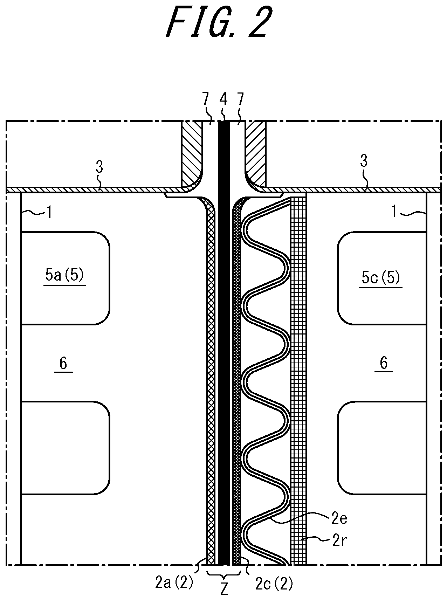

FIG. 2 illustrates a zero-gap structure of an example of the bipolar electrolyzer including the bipolar electrolytic cell for alkaline water electrolysis according to the present embodiment (cross-sectional view of part indicated by dashed quadrilateral border in FIG. 1).
As illustrated in FIGS. 1 and 2, a bipolar electrolyzer 50 according to the present embodiment is preferably a bipolar electrolyzer in which a plurality of elements 60, each including: an anode 2a; a cathode 2c; a partition wall 1 separating the anode 2a and the cathode 2c from one another; and an outer frame 3 bordering the partition wall 1, are stacked with membranes 4 interposed therebetween.
Moreover, each membrane 4 in the bipolar electrolyzer 50 according to the present embodiment is in contact with an anode 2a and a cathode 2c so as to form a zero-gap structure Z (refer to FIG. 2).
The bipolar electrolyzer according to the present embodiment may be a monopolar type or a bipolar type, but is preferably a bipolar electrolyzer for alkaline water electrolysis in which bipolar elements are stacked via membranes.
The monopolar method is a method of directly connecting each of one or more elements to a power supply and is implemented through a parallel circuit in which a cathode terminal element is provided at the anode of each of the elements, which are arranged in parallel, with a membrane interposed therebetween, an anode terminal element is provided at the cathode of each of the elements with a membrane interposed therebetween, and these terminal elements are connected to a power supply.
The bipolar method is one method of connecting a large number of bipolar elements to a power supply and is a method in which a plurality of bipolar elements having an anode as one surface thereof and a cathode as one surface thereof are arranged in the same orientation and connected in series, and then only both ends thereof are connected to a power supply.
Bipolar electrolyzers have a feature of enabling a small power supply current and can be used to produce a large quantity of a compound, specific substance, or the like through electrolysis in a short time. Since power supply equipment having low current and high voltage is cheaper and more compact when power supply equipment having the same power is compared, the bipolar method is more preferable than the monopolar method from an industrial viewpoint.

((Elements))

The elements may be elements used in a monopolar electrolyzer, bipolar elements used in a bipolar electrolyzer, or the like. Of these elements, bipolar elements are preferable.

One example of a bipolar element 60 used in the bipolar electrolyzer 50 for alkaline water electrolysis includes a partition wall 1 separating an anode 2a and a cathode 2c from each other, and also includes an outer frame 3 bordering the partition wall 1. More specifically, the partition wall 1 is conductive and the outer frame 3 runs along the periphery of the partition wall 1 such as to border the partition wall 1.

The element includes an anode 2a, a cathode current collector 2r, a conductive elastic body 2e, and a cathode 2c in this order, and may further include a partition wall 1, ribs 6, an outer frame 3, a reverse current absorber, an anode current collector, and the like.

In the present embodiment, the bipolar electrolyzer 50 is constructed by stacking the required number of bipolar elements 60 as illustrated in FIG. 1.

In the example illustrated in FIG. 1, the bipolar electrolyzer 50 includes, from one end thereof, a fast head 51g, an insulating plate 51i, and an anode terminal element 51a that are arranged in order, and further includes an anode-side gasket portion 7, a membrane 4, a cathode-side gasket portion 7, and a bipolar element 60 that are arranged in this order. In this case, the bipolar element 60 is arranged such that the cathode 2c thereof faces toward the anode terminal element 51a. Components from the anode gasket up to the bipolar element 60 are repeatedly arranged as many times as required for the designed production quantity. After components from the anode gasket up to the bipolar element 60 have been arranged repeatedly the required number of times, an anode-side gasket portion 7, a membrane 4, and a cathode-side gasket portion 7 are arranged again, and finally a cathode terminal element 51c, an insulating plate 51i, and a loose head 51g are arranged in this order. All of these components are tightened together with tie rods 51r to provide the bipolar electrolyzer 50.

The arrangement of the bipolar electrolyzer 50 can be arbitrarily selected from either the anode side or the cathode side and is not limited to the order set forth above.

As illustrated in FIG. 1, in the bipolar electrolyzer 50, the bipolar elements 60 are arranged between the anode terminal element 51a and the cathode terminal element 51c, and the membranes 4 are arranged between the anode terminal element 51a and a bipolar element 60, between bipolar elements 60 arranged adjacent to each other, and between a bipolar element 60 and the cathode terminal element 51c, respectively.

In the bipolar electrolyzer 50 accordingly to the present embodiment, each membrane 4 is in contact with an anode 2a and a cathode 2c so as to form a zero-gap structure Z as illustrated in FIG. 2.

In particular, in the bipolar electrolyzer 50 according to the present embodiment, a section between the partition walls 1 of two bipolar elements 60 that are adjacent and a section between the partition walls 1 of a bipolar element 60 and a terminal element that are adjacent are each referred to as an electrolytic cell 65. Each electrolytic cell 65 includes: a partition wall 1, an anode compartment 5a, and an anode 2a of one element; a membrane 4; and a cathode 2c, a cathode compartment 5c, and a partition wall 1 of the other element.

A bipolar electrolytic cell for alkaline water electrolysis according to the present disclosure comprises a zero-gap structure in which a plurality of elements including an anode and a cathode are stacked with a membrane interposed therebetween, and in which the membrane is in contact with the anode and the cathode. In the zero-gap structure, a heat release coefficient Ha (K/sec) of the anode defined by formula (1) and a heat release coefficient Hc (K/sec) of the cathode defined by formula (2) have a difference $\Delta H$ ($|Ha - Hc|$) of 12 K/sec or less, and the membrane has a linear expansion coefficient of not less than $0.5 \times 10^{-5}$ (1/K) and not more than $5.0 \times 10^{-5}$ (1/K).

$$(1) \qquad Ha = (I \times \eta a) \div (Ca \times Da)$$

$$(2) \qquad Hc = (I \times \eta c) \div (Cc \times Dc)$$

I: Current density (6 ($kA/m^2$))
$\eta a$: Anode overvoltage (mV) at current density of 6 $kA/m^2$
$\eta c$: Cathode overvoltage (mV) at current density of 6 $kA/m^2$
Ca: Anode specific heat (J/kg·K)
Cc: Cathode specific heat (J/kg·K)
Da: Anode area density ($kg/m^2$)
Dc: Cathode area density ($kg/m^2$)

Note that the overvoltage, specific heat, area density, and thermal expansion coefficient can be measured by methods subsequently described in the EXAMPLES section.

In conventional zero-gap electrolytic cells, there are cases in which a temperature gradient forms between the anode side and the cathode side of a membrane when the electrolytic cell is operated with a high current density or with a variable power supply as a consequence of a difference between the anode and the cathode in terms of heat release associated with passing of current and a difference in heat capacity. The membrane undergoes thermal expansion in accordance with rising temperature, and thus a temperature difference between the front and rear of the membrane results in non-uniform thermal expansion and curving of the membrane as stress acts to cause warping of the membrane. However, since the membrane in a zero-gap structure is pressed against, localized concentration of stress occurs at part of a contacting portion of the membrane with an electrode (particularly a contacting portion of an end part of an electrode with the membrane). This acts as a cause of membrane tearing, rupturing, or creasing in accompaniment to extended/unstable passing of current.

In the bipolar electrolytic cell 65 for alkaline water electrolysis according to the present embodiment, setting $\Delta H$ and the linear expansion coefficient within the ranges set forth above can reduce the difference between the anode 2a and the cathode 2c in terms of self-heating associated with passing of current, and can suppress curving of the membrane 4 to an extent such that tearing and rupturing of the membrane 4 do not occur. This can prevent the breakdown of separation of the cathode compartment 5c and the anode compartment 5a, and can thereby maintain partitioning of hydrogen gas and oxygen gas. Moreover, an electrochemical reaction can be continued without cracking of the membrane 4 and while maintaining high gas production purity even under extended passing of current or unstable passing of current by an input power supply.

$\Delta H$ is preferably 8.0 K/sec or less, and more preferably 5.0 K/sec or less from a viewpoint of further reducing the temperature gradient that forms between the anode side and the cathode side of the membrane 4 in the zero-gap structure Z.

The linear expansion coefficient of the membrane is preferably $2.0 \times 10^{-5}$ (1/K) or less.

Ranges for $\Delta H$ and the linear expansion coefficient may be individually selected so as to suitably obtain the effects disclosed herein.

The heat release coefficient Ha is preferably 2.0 K/sec or less. This can suppress a rise in temperature of the anode to within a range that is not excessively high. Ha is more preferably 1.0 K/sec or less, and is preferably 0.5 K/sec or more.

The heat release coefficient Hc is preferably 5.0 K/sec or less. This can suppress a rise in temperature of the cathode to within a range that is not excessively high. Hc is more preferably 3.0 K/sec or less, and is preferably 0.5 K/sec or more.

Ranges for Ha and Hc may be individually selected so as to suitably obtain the effects disclosed herein.

The heat release coefficient Ha and the heat release coefficient Hc preferably have a sum $\Sigma H$ (Ha + Hc) of 0.5 K/sec or more. This can provide a temperature of approximately 80°C to 90°C through heat release during passing of current and can lower the cell overvoltage. The sum $\Sigma H$ is more preferably 1.0 K/sec or more, and even more preferably 2.0 K/sec or more, and is preferably 8.0 K/sec or less.

The thickness d of the bipolar electrolytic cell for alkaline water electrolysis according to the present embodiment is preferably 10 mm to 100 mm, and more preferably 15 mm to 50 mm.

The thickness d of the electrolytic cell 65 is the thickness of a section between the respective partition walls 1 of two bipolar elements 60 that are adjacent and the thickness of a section between the respective partition walls 1 of a bipolar element 60 and a terminal element that are adjacent. These thicknesses respectively refer to the distance between the respective partition walls 1 of two bipolar elements 60 that are adjacent in a direction perpendicular to the partition walls 1 and to the distance between a partition wall 1 of a bipolar element 60 and a partition wall of a terminal element that are adjacent in a direction perpendicular to the partition walls 1. In a case in which the thickness d is not constant throughout the bipolar electrolyzer, an average value thereof may be taken.

The ranges for $\Delta H$, the linear expansion coefficient of the membrane, the heat release coefficient Ha, the heat release coefficient Hc, the sum $\Sigma H$, and the thickness d in the present embodiment (for example, the above-described [1] to [14]) may be any of the numerical ranges set forth above.

In a situation in which there is a gap between a membrane 4 and an anode 2a or cathode 2c in alkaline water electrolysis, a large amount of bubbles generated by electrolysis accumulates in this section along with electrolyte, leading to a significant increase in electric resistance. In order to greatly reduce the bath voltage in each electrolytic cell 65, it is effective to minimize the separation between the anode 2a and the cathode 2c (hereinafter also referred to as the "inter-electrode distance") to eliminate the influence of electrolyte and bubbles present between the anode 2a and the cathode 2c.

Therefore, a zero-gap structure is adopted that can maintain a state in which the anode 2a and the membrane 4 are in contact with each other, and so are the cathode 2c and the membrane 4, over the entire surface of the electrodes, or a state in which the inter-electrode distance is substantially the same as the thickness of the membrane 4, over the entire surface of the electrodes, such that there is almost no gap between the anode 2a and the membrane 4 and between the cathode 2c and the membrane 4.

Means for minimizing the inter-electrode distance have already been proposed. Examples thereof include a method in which an anode 2a and a cathode 2c are processed such as to be perfectly smooth and are then pressed such as to sandwich a membrane 4 therebetween, a method in which an elastic body (particularly a conductive elastic body 2e) such as a spring is arranged between an electrode 2 and a partition wall 1 and in which the electrode is supported by this elastic body, and a method in which such an elastic body (particularly a conductive elastic body 2e) and a current collector (particularly a cathode current collector 2c) are arranged between an electrode 2 and a partition wall 1 and in which the elastic body is supported by the current collector. A method using a conductive elastic body 2e is adopted in the example illustrated in FIG. 2.

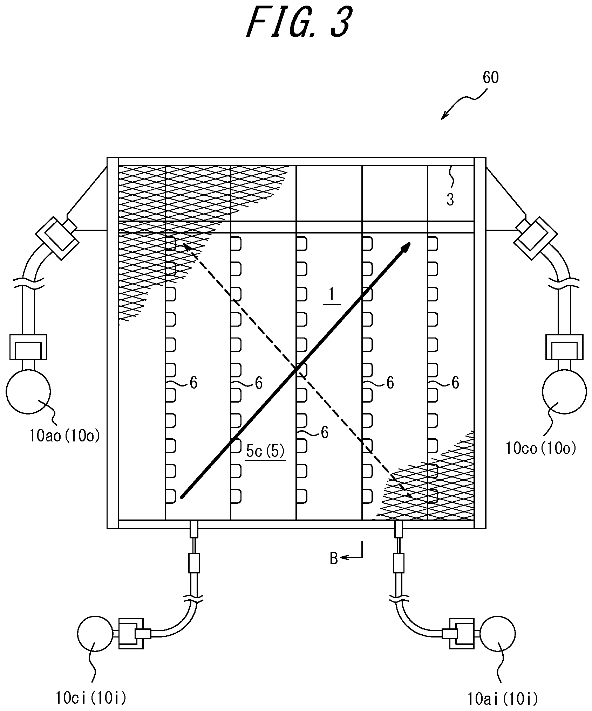

In the bipolar electrolyzer 50 according to the present embodiment, the partition walls 1, outer frames 3, and membranes 4 define electrode compartments 5 through which electrolyte passes as illustrated in FIGS. 2 and 3.

In more detail, each electrode compartment 5 has an electrolyte inlet 5i for introducing electrolyte into the electrode compartment 5 and an electrolyte outlet 5o for drawing electrolyte out of the electrode compartment 5 at the boundary with the outer frame 3. More specifically, each anode compartment 5a includes an anode electrolyte inlet for introducing electrolyte into the anode compartment and an anode electrolyte outlet for drawing electrolyte out of the anode compartment 5a, and each cathode compartment 5c includes a cathode electrolyte inlet for introducing electrolyte into the cathode compartment 5c and a cathode electrolyte outlet for drawing electrolyte out of the cathode compartment 5c.

In the example illustrated in FIGS. 1 to 3, each electrode compartment 5 has a cuboid shape as a result of a rectangular partition wall 1 and a rectangular membrane 4 being arranged in parallel and as a result of an inner surface at a partition wall 1 side of a cuboid outer frame 3 provided at the periphery of the partition wall 1 being perpendicular to the partition wall 1.

A header pipe, which is a pipe for distributing or collecting electrolyte, is normally attached to the bipolar electrolyzer 50. The header pipe includes an anode inlet header 10ai by which electrolyte enters an anode compartment 5a and a cathode inlet header lOci by which electrolyte enters a cathode compartment 5c at a lower part of the outer frame 3 disposed at the periphery of the partition wall 1, and, in the same way, includes an anode outlet header 10ao by which electrolyte leaves the anode compartment 5a and a cathode outlet header lOco by which electrolyte leaves the cathode compartment 5c at an upper part of the outer frame 3 disposed at the periphery of the partition wall 1.

A header pipe attached to the bipolar electrolyzer 50 illustrated in FIGS. 1 and 2 is typically disposed as an internal header or an external header. In the present disclosure, either type may be adopted without any particular limitations.

In the bipolar electrolyzer 50 according to the present embodiment, electrolyte that has been distributed by the anode inlet header 10ai is introduced into the anode compartment 5a through the anode electrolyte inlet, passes through the anode compartment 5a, is drawn out of the anode compartment 5a through the anode electrolyte outlet 5ao, and is collected by the anode outlet header 10ao.

The following provides a detailed description of components of the bipolar electrolytic cell for alkaline water electrolysis and the bipolar electrolyzer according to the present embodiment.

In the following, preferred embodiments for enhancing the effects disclosed herein are also described in detail.

-Partition wall-

Each partition wall 1 is disposed between a cathode 2c and an anode 2a, and is preferably disposed between the anode 2a and a cathode current collector 2r, and/or between the cathode 2c and an anode current collector 2r.

In the present embodiment, the shape of each partition wall may be a plate-like shape of a certain thickness, but is not particularly limited.

The shape of each partition wall in plan view is not particularly limited and it may be a rectangular shape (e.g., a square or a rectangle) or a circular shape (e.g., a circle or an ellipse), where corners of a rectangular shape may be rounded.

In one embodiment, a partition wall and an outer frame may be joined by welding or any other method to obtain a unified structure. For example, a partition wall may be provided with flange portions that stick out in a perpendicular direction relative to a plane of the partition wall (anode flange portion sticking out at the anode side and cathode flange portion sticking out at the cathode side), and these flange portions may constitute part of an outer frame.

The size of each partition wall is not particularly limited, and may be appropriately designed according to the electrode compartment size.

With regards to the thickness of each partition wall, it is not necessary to have a thick partition wall in a case in which anode ribs and cathode ribs are joined to the partition wall by welding or the like to obtain a unified structure because the partition wall is reinforced by the anode ribs and the cathode ribs. A partition wall thickness of 0.5 mm to 2 mm is normally sufficient. A thickness of less than 0.5 mm is disadvantageous in terms that welding of anode ribs and cathode ribs to the partition wall becomes more difficult and handling in production also becomes more difficult, whereas a thickness of more than 2 mm is undesirable because production cost increases and electrolytic unit weight also increases.

From a viewpoint of achieving uniform supply of electric power, each partition wall is preferably made of a material having high conductivity, and from perspectives of alkali resistance and heat resistance, preferred materials include nickel, nickel alloy, mild steel, and nickel alloy plated with nickel.

-Electrodes-

Although any commonly known electrodes can be adopted for hydrogen production by alkaline water electrolysis using the bipolar electrolyzer according to the present embodiment, it is preferable to select materials of the electrodes such that ΔH in the zero-gap structure is 12 K/sec or less.

Metal porous bodies are preferably used as the anode and the cathode. This is because electrode surface area can be increased and production of hydrogen or the like by the electrolyzer can be improved.

Examples of porous bodies that may be used include a plain weave mesh, a perforated metal, an expanded metal, and a metal foam.

In a case in which a plain weave mesh is used, a wire diameter of not less than 0.05 mm and not more than 1.0 mm, a pitch of not less than 20 mesh and not more than 60 mesh, and an open fraction of not less than 30% and not more than 70% are preferable for increasing the amount of gas that is produced through increased electrolysis surface area and also for efficiently removing gas produced by electrolysis from the electrode surface, but the dimensions of the plain weave mesh are not particularly limited. More preferably, the wire diameter is not less than 0.1 mm and not more than 0.3 mm, the pitch is not less than 30 mesh and not more than 50 mesh, and the open fraction is not less than 40% and not more than 60%.

In a case in which a perforated metal is used, an opening diameter of not less than 2 mm and not more than 8 mm, a pitch of not less than 2 mm and not more than 10 mm, an open fraction of not less than 20% and not more than 80%, and a thickness of not less than 0.5 mm and not more than 2 mm are preferable for increasing the amount of gas that is produced through increased electrolysis surface area and also for efficiently removing gas produced by electrolysis from the electrode surface, and from a viewpoint of mechanical strength, but the dimensions of the perforated metal are not particularly limited.

In a case in which an expanded metal is used, a short way of mesh (SW) of not less than 2 mm and not more than 5 mm, a long way of mesh (LW) of not less than 3 mm and not more than 10 mm, a thickness of not less than 0.5 mm and not more than 2 mm, and an open fraction of not less than 20% and not more than 80% are preferable for increasing the amount of gas that is produced through increased electrolysis surface area and also for efficiently removing gas produced by electrolysis from the electrode surface, and from a viewpoint of mechanical strength, but the dimensions of the expanded metal are not particularly limited. More preferably, SW is not less than 3 mm and not more than 4 mm, LW is not less than 4 mm and not more than 6 mm, the thickness is not less than 0.8 mm and not more than 1.5 mm, and the open fraction is not less than 40% and not more than 60%.

The cathode preferably includes openings and has an open fraction of not less than 40% and not more than 70%. Although reducing the open fraction increases the area density of the cathode and can reduce the cathode heat release coefficient Hc, this conversely makes it harder to remove gas produced at the cathode from the surface of the cathode, and reduces the effective area for electrolysis due to accumulation of gas in proximity to the cathode and the membrane. By setting the open fraction within the range set forth above, gas produced by electrolysis can be efficiently removed from the cathode surface while also suppressing increase of the cathode heat release coefficient Hc. The open fraction of the cathode is more preferably not less than 50% and not more than 60%.

Note that the open fraction of an electrode can be measured by a method described further below in the EXAMPLES section.

The anode preferably includes openings and has an open fraction of not less than 30% and not more than 70%. Although reducing the open fraction increases the area density of the anode and can reduce the anode heat release coefficient Ha, this conversely makes it harder to remove gas produced at the anode from the surface of the anode, and reduces the effective area for electrolysis due to accumulation of gas in proximity to the anode and the membrane. By setting the open fraction within the range set forth above, gas produced by electrolysis can be efficiently removed from the anode surface while also suppressing increase of the anode heat release coefficient Ha. The open fraction of the anode is more preferably not less than 40% and not more than 65%, and even more preferably not less than 50% and not more than 60%.

Ranges for the open fraction of the cathode and the open fraction of the anode may be individually selected so as to suitably obtain the effects disclosed herein.

In a case in which a metal foam is used, a porosity of not less than 80% and not more than 95% and a thickness of not less than 0.5 mm and not more than 2.0 mm are preferable for increasing the amount of gas that is produced through increased electrolysis surface area and also for efficiently removing gas produced by electrolysis from the electrode surface, and from a viewpoint of mechanical strength, but the dimensions of the metal foam are not particularly limited.

A substrate may be used by itself as an electrode in the bipolar electrolytic cell for alkaline water electrolysis according to the present embodiment or, alternatively, an electrode having a catalyst layer with high reaction activity on the surface of a substrate may be used. However, it is preferable to use an electrode having a catalyst layer with high reaction activity on the surface of a substrate.

Although the material of the substrate is not particularly limited, mild steel, stainless steel, nickel, and nickel-based alloys are preferable in terms of resistance to the operating environment.

The surface of the cathode is preferably coated by a layer containing at least one platinum group element selected from the group consisting of Ru, Rh, Pd, Os, Ir, and Pt. This can further lower the overvoltage of the cathode and reduce the heat release coefficient Hc of the cathode. The platinum group element contained in the layer at the surface of the cathode is more preferably Pd, Ir, or Pt.

The catalyst layer of the anode preferably has high oxygen producing capability. Nickel, cobalt, iron, a platinum group element, or the like may be used for the catalyst layer of the anode. In order to achieve the desired activity and durability, the catalyst layer may be formed by using any of these examples in the form of a simple substance of metal, a compound such as an oxide, a complex oxide or alloy of a plurality of metal elements, or a mixture thereof. Specific examples include nickel plating, alloy plating of nickel and cobalt, nickel and iron, and the like, complex oxides including nickel and/or cobalt such as $LaNiO_3$, $LaCoO_3$, and $NiCo_2O_4$, compounds of platinum group elements such as iridium oxide, carbon materials such as graphene, and the like. Organic substances such as polymers may be contained in order to improve durability and adhesion to the substrate.

The catalyst layer of the cathode preferably has high hydrogen producing capability. Nickel, cobalt, iron, a platinum group element (for example, ruthenium, rhodium, palladium, osmium, or iridium), or the like may be used for the catalyst layer of the cathode. In order to achieve the desired activity and durability, the catalyst layer may be formed by using any of these examples in the form of a simple substance of metal, a compound such as an oxide, a complex oxide or alloy of a plurality of metal elements, or a mixture thereof. Specific examples include a porous coating prepared by plasma spraying using Raney nickel, a Raney alloy formed from a combination of materials such as nickel and aluminum or nickel and tin, a nickel compound, or a cobalt compound as a material; an alloy or complex compound of nickel and an element selected from cobalt, iron, molybdenum, silver, copper, and the like; a metal or oxide of a platinum group element having high hydrogen producing capability such as platinum or ruthenium; a mixture of such a metal or oxide of a platinum group element with a compound of another platinum group element such as iridium or palladium or a compound of a rare earth metal such as lanthanum or cerium; and a carbon material such as graphene. In order to achieve high catalytic activity and durability, a plurality of layers of these materials may be present or a plurality of these materials may be present in the catalyst layer. Organic substances such as polymers may be contained in order to improve durability and adhesion to the substrate.

An excessively thick catalyst layer may increase electric resistance and raise the overvoltage, whereas an excessively thin catalyst layer may lead to electrode deterioration and raised overvoltage due to dissolution or detachment of the catalyst resulting from extended electrolysis or suspension of electrolysis.

For these reasons, a catalyst layer thickness of not less than 0.2 $\mu$m and not more than 1,000 $\mu$m is preferable, and a catalyst layer thickness of not less than 0.5 $\mu$m and not more than 300 $\mu$m is more preferable.

The thickness of a catalyst layer can be measured by, for example, observing a cross-section of an electrode using an electron microscope.

Examples of methods by which the catalyst layer may be formed on the substrate include: a thermal spraying method such as plating or plasma spraying; a thermal decomposition method including applying a precursor layer solution onto the substrate and subsequently performing heating thereof; a method including mixing a catalyst substance with a binder component and immobilizing it on a substrate; and a vacuum film-forming method such as sputtering.

Formation of a precursor may be carried out by applying a liquid containing a metal element onto the substrate surface and then drying the liquid, for example.

Examples of metal elements that may be used include palladium, iridium, platinum, gold, ruthenium, rhodium, cerium, nickel, cobalt, iron, molybdenum, silver, copper, zirconium, titanium, hafnium, and lanthanoids. The metal in the coating liquid is not limited to a particular form, and may be in the form of fine particles of a metal or a metal compound, or may be dissolved and ionized. In the form of fine particles, the metal is preferably dispersed in the liquid in order to form a homogeneous precursor layer. For this reason, the particle diameter is preferably 100 nm or less. In a case in which the metal is ionized, examples of the metal salt include: an inorganic compound salt such as a halide (for example, a fluoride, chloride, bromide, or iodide), nitrate, sulfate, or phosphate; and an organic compound salt, a representative example of which being an acetate. Of these metal salts, chlorides and nitrates are preferable due to industrial availability of materials. In addition, nitrates are more preferable because there is less substrate degradation caused by anion components remaining after decomposition, making it possible to provide an electrode with good storage stability.

In the bipolar electrolytic cell for alkaline water electrolysis according to the present embodiment, an electrode specific surface area of not less than 0.001 m2/g and not more than 1 m2/g is preferable, and an electrode specific surface area of not less than 0.005 m$^2$/g and not more than 0.1 m$^2$/g is more preferable. If the specific surface area of an electrode (specific surface area of whole electrode including substrate) is small, the number of sites having reaction activity per unit area decreases and it may not be possible to obtain a low overvoltage. On the other hand, if the specific surface area of an electrode for water electrolysis is excessively large, catalyst layer mechanical strength decreases and durability may decrease.

The specific surface area can be measured by the BET method, for example. A measurement sample is loaded into a dedicated cell and subjected to pretreatment through thermal vacuum evacuation to remove adsorbates on pore surfaces in advance. Thereafter, an adsorption/desorption isotherm of gas adsorption to the measurement sample is measured at -196°C. The specific surface area of the measurement sample can be determined through analysis of the obtained adsorption/desorption isotherm by the BET method.

The area used for electrolysis at the surface of an electrode can be obtained in a pseudo manner by measuring the capacitance of an electric double layer formed at the electrode-electrolyte interface.

The double layer capacitance can be measured by an electrochemical impedance method, for example. The double layer capacitance is calculated by using equivalent circuit fitting to analyze a Cole-Cole plot obtained by plotting real and imaginary components from AC impedance measurement.

The resistance of a coating of an electrode in the bipolar electrolytic cell for alkaline water electrolysis according to the present embodiment is preferably 2 $\Omega \cdot$cm$^2$ or less, and more preferably 0.5 $\Omega \cdot$cm$^2$ or less. An excessively high electrode coating resistance leads to a rise in the overvoltage when electrolysis is performed under conditions of high current density in order to achieve high energy efficiency.

The coating resistance can be measured by an electrochemical impedance method, for example. The coating resistance is calculated by using equivalent circuit fitting to analyze a Cole-Cole plot obtained by plotting real and imaginary components from AC impedance measurement.

The specific heat Ca of the anode in the present embodiment (for example, the above-described [1] to [14]) is preferably not less than 100 J/kg·K and not more than 1,000 J/kg·K, and more preferably not less than 300 J/kg·K and not more than 800 J/kg·K. Setting the specific heat of the anode within any of the ranges set forth above makes it difficult for the temperature at the anode side of the membrane to rise.

The specific heat of an electrode can be measured by a method described further below in the EXAMPLES section.

The specific heat Cc of the cathode in the present embodiment (for example, the above-described [1] to [14]) is preferably not less than 100 J/kg·K and not more than 1,000 J/kg·K, and more preferably not less than 300 J/kg·K and not more than 800 J/kg·K. Setting the specific heat of the cathode within any of the ranges set forth above makes it difficult for the temperature at the cathode side of the membrane to rise.

The area density Da of the anode in the present embodiment (for example, the above-described [1] to [14]) is preferably not less than 2.5 kg/m$^2$ and not more than 7.0 kg/m$^2$, and more preferably not less than 3.5 kg/m$^2$ and not more than 5.5 kg/m$^2$. By setting the area density of the anode within any of the ranges set forth above, it is possible to achieve a balance of an effect of reducing the heat release coefficient of the anode and efficient removal of gas produced at the anode surface.

The area density of an electrode can be measured by a method described further below in the EXAMPLES section.

The area density Dc of the cathode in the present embodiment (for example, the above-described [1] to [14]) is preferably not less than 0.30 kg/m$^2$ and not more than 0.70 kg/m$^2$, and more preferably not less than 0.45 kg/m$^2$ and not more than 0.55 kg/m$^2$. By setting the area density of the cathode within any of the ranges set forth above, it is possible to achieve a balance of an effect of reducing the heat release coefficient of the cathode and efficient removal of gas produced at the cathode surface.

The overvoltage $\eta$a of the anode at a current density of 6 kA/m$^2$ in the present embodiment (for example, the above-described [1] to [14]) is preferably 400 mV or less, and more preferably 300 mV or less. When the overvoltage of the anode is within any of the ranges set forth above, the heat release coefficient of the anode decreases, and cracking or tearing of the membrane is further inhibited. Moreover, when the overvoltage of the anode is small, the cell voltage decreases, and electrolysis can be carried out with greater energy efficiency.

The oxygen overvoltage of an anode can be measured by a method described further below in the EXAMPLES section.

The overvoltage $\eta$c of the cathode at a current density of 6 kA/m$^2$ in the present embodiment (for example, the above-described [1] to [14]) is preferably 400 mV or less, and more preferably 150 mV or less. When the overvoltage of the cathode is within any of the ranges set forth above, the heat release coefficient of the cathode decreases, and cracking or tearing of the membrane is further inhibited. Moreover, when the overvoltage of the cathode is small, the cell voltage decreases, and electrolysis can be carried out with greater energy efficiency.

The hydrogen overvoltage of a cathode can be measured by a method described further below in the EXAMPLES section.

Ranges for Ca, Cc, Da, Dc, ηa, and ηc may be individually selected so as to suitably obtain the effects disclosed herein.

In the present embodiment (for example, the above-described [1] to [14]), the overvoltage ηa of the anode is preferably larger than the overvoltage ηc of the cathode. This can reduce the difference between the heat release coefficients thereof.

The difference between ηa and ηc (ηa - ηc) is preferably 300 mV or less, and more preferably 150 mV or less. When the difference between ηa and ηc is within any of the ranges set forth above, the difference between the anode and the cathode in terms of heat generated due to overvoltage is reduced, and cracking or tearing of the membrane is further inhibited.

The electrode size may be set in accordance with the electrode compartment size without any particular limitations and may, for example, be 0.4 m to 4.0 m in length, 0.4 m to 6.0 m in width, and 0.1 mm to 3 mm in thickness.

-Outer frame-

Although the shape of each outer frame 3 in the bipolar electrolytic cell for alkaline water electrolysis according to the present embodiment is not particularly limited as long as it can border the corresponding partition wall 1, the outer frame 3 may have a shape including an inner surface extending along an extension of the partition wall 1 in a direction perpendicular to the plane of the partition wall 1.

The shape of the outer frame is not particularly limited, and may be appropriately determined according to the shape of the partition wall in plan view.

The dimensions of the outer frame are not particularly limited, and may be designed according to the external dimensions of the electrode compartments.

In one embodiment, a partition wall and an outer frame may be joined by welding or any other method to obtain a unified structure. For example, a partition wall may be provided with flange portions that stick out in a perpendicular direction relative to a plane of the partition wall (anode flange portion sticking out at the anode side and cathode flange portion sticking out at the cathode side), and these flange portions may constitute part of an outer frame.

The material of the outer frame is preferably a material having conductivity. From perspectives of alkali resistance and heat resistance, nickel, nickel alloy, mild steel, and nickel alloy plated with nickel are preferable.

-Membrane-

An ion permeable membrane is used as the membrane 4 in each bipolar electrolytic cell 65 for alkaline water electrolysis according to the present embodiment in order that produced hydrogen gas and oxygen gas can be separated from one another while still conducting ions. This ion permeable membrane may be an ion exchange membrane having ion exchange ability or a porous membrane through which electrolyte can permeate. The ion permeable membrane preferably has low gas permeability, high ion conductivity, low electron conductivity, and high strength.

The porous membrane has a plurality of fine through-holes, and may be, for example, a polymeric porous membrane, an inorganic porous membrane, a woven fabric, or a nonwoven fabric. These may be prepared by known techniques.

Examples of methods by which a polymeric porous membrane may be produced include a phase inversion method (microphase separation method), an extraction method, a stretching method, and a wet gel stretching method. The phase inversion method (microphase separation method) is a method in which a solution obtained by dissolving a polymeric material in a good solvent is used to prepare a film and then porosity is induced by subjecting the film to phase separation in a poor solvent (non-solvent induced phase separation method). The extraction method is a method in which an inorganic powder such as calcium carbonate is kneaded with a polymeric material, a film is prepared, and then the inorganic powder is dissolved and extracted to induce porosity. The stretching method is a method in which a film of a polymeric material having a certain crystal structure is stretched under certain conditions to open pores in the film. The wet gel stretching method is a method in which a polymeric material is caused to swell using an organic solvent such as liquid paraffin and is used to form a gel-like sheet, the sheet is stretched under certain conditions, and then the organic solvent is extracted and removed.

Examples of methods by which an inorganic porous membrane may be produced include a sintering method. In the sintering method, a shaped product obtained through pressing or extrusion is baked and is unified in a state with pores remaining therein.

Examples of methods by which a nonwoven fabric may be produced include a spunbond method and an electrospinning method. The spunbond method is a method in which filaments spun from melted pellets are bonded by hot rolling and are thereby unified in the form of a sheet. The electrospinning method is a method in which spraying is performed while applying a high voltage between a syringe containing molten polymer and a collector so as to accumulate thinly elongated fibers on the collector.

The porous membrane preferably contains a polymeric material and hydrophilic inorganic particles. The presence of hydrophilic inorganic particles imparts hydrophilicity on the porous membrane.

---Polymeric material---

Examples of polymeric materials that may be used include polysulfone, polyethersulfone, polyphenylsulfone, polyvinylidene fluoride, polycarbonate, tetrafluoroethylene-perfluoroalkyl vinyl ether copolymer, tetrafluoroethylene-ethylene copolymer, polyvinylidene fluoride, polytetrafluoroethylene, perfluorosulfonic acid polymer, perfluorocarboxylic acid polymer, polyethylene, polypropylene, polyphenylene sulfide, poly(p-phenylenebenzobisoxazole), polyketone, polyimide, and polyetherimide. Of these polymeric materials, polysulfone, polyethersulfone, polyphenylsulfone, polyphenylene sulfide, and polytetrafluoroethylene are preferable, and polysulfone is more preferable. One of these polymeric materials may be used individually, or two or more of these polymeric materials may be used together.

By using polysulfone, polyethersulfone, or polyphenylsulfone as the polymeric material, resistance to high temperature and high concentration alkali solution can be further improved.

Moreover, the membrane can be more simply prepared by adopting a method such as non-solvent induced phase separation. Particularly in a case in which polysulfone is used, the pore diameter can be more accurately controlled.

Polysulfone, polyethersulfone, or polyphenylsulfone may be subjected to crosslinking treatment. The weight-average molecular weight of polysulfone, polyethersulfone, or polyphenylsulfone that has undergone crosslinking treatment, in terms of standard polystyrene-equivalent weight-average molecular weight, is preferably not less than 40,000 and not more than 150,000. The method of crosslinking treatment is not particularly limited and may be crosslinking through irradiation with radiation such as an electron beam or $\gamma$-rays, thermal crosslinking using a crosslinking agent, or the like. Note that the standard polystyrene-equivalent weight-average molecular weight can be measured by GPC.

The membrane is preferably a porous membrane having a thickness of not less than 60 $\mu$m and not more than 600 $\mu$m. A porous membrane thickness of 60 $\mu$m or more makes the membrane difficult to break. Moreover, a porous membrane thickness of 600 $\mu$m or less enables a low overvoltage without the overvoltage becoming excessively high. The thickness of the membrane is more preferably not less than 100 $\mu$m and not more than 500 $\mu$m, and even more preferably not less than 300 $\mu$m and not more than 500 $\mu$m.

The thermal conductivity of the membrane is preferably not less than 0.01 W/m·K and not more than 3.0 W/m·K. Through a thermal conductivity of 0.01 W/m·K or more, a temperature gradient between the front and rear of the membrane can be reduced, and curving of the membrane can be inhibited. Moreover, a thermal conductivity of 3.0 W/m·K or less allows selection of an appropriate resin as a material of the membrane. The thermal conductivity of the membrane is more preferably not less than 0.1 W/m·K and not more than 1.0 W/m·K, and even more preferably not less than 0.3 W/m·K and not more than 1.0 W/m.K.

Note that the thermal conductivity of a membrane can be measured by a method described further below in the EXAMPLES section.

<Production method of membrane>

The following describes an example in which wet phase separation is adopted as the production method of the membrane.

The method preferably includes a step of preparing a solution containing a polymeric resin, a solvent, and hydrophilic inorganic particles, a step of applying the solution onto a substrate to form a film on the substrate, a step of exposing a surface at the opposite side of the film to the substrate to a gas containing vapor of a poor solvent for the polymeric resin, and a step of immersion in a coagulation bath containing a poor solvent for the polymeric resin to form a porous membrane.

So long as the effects of the present embodiment are obtained, these steps are not limited to being performed in the order described above and may be performed simultaneously or consecutively as necessary.

The solvent is a solvent having an attribute of causing dissolution of the polymeric resin and is preferably a good solvent in which solubility of the used polymeric resin is high. The solvent can be selected as appropriate depending on the type polymeric resin that is used and so forth. Examples of solvents that may be used include, but are not particularly limited to, N-methyl-2-pyrrolidone, N,N-dimethylacetamide, N,N-dimethylformamide, and dimethylsulfoxide. One of these solvents may be used individually, or two or more of these solvents may be used together. Of these solvents, N-methyl-2-pyrrolidone is more preferable from viewpoints such as the solubility of various resins therein, non-volatility, and ease of solvent management.

The poor solvent is a solvent in which the polymeric resin does not substantially dissolve, and is preferably a non-solvent in which the polymeric resin is completely insoluble. The poor solvent can be selected as appropriate depending on the type of polymeric resin that is used. Examples of poor solvents that may be used include, but are not particularly limited to, water, methanol, ethanol, propyl alcohol, isopropyl alcohol, butyl alcohol, and isobutyl alcohol.

In order to control the surface pore diameter of the porous membrane, it is preferable that, for example, the step of exposing the surface at the opposite side of the film to the substrate to a gas containing vapor of a poor solvent for the polymeric resin is performed in-between the step of applying the solution onto the substrate to form the film on the substrate and the step of immersion in a coagulating bath containing a poor solvent for the polymeric resin to form a porous membrane.

--Ion exchange membrane--

Examples of ion exchange membranes that may be used include cation exchange membranes that allow selective permeation of cations and anion exchange membranes that allow selective permeation of anions. Either type of ion exchange membrane may be used.

Known materials may be used as the material of the ion exchange membrane without any particular limitations. For example, a fluorine-containing resin or a modified resin of a polystyrene-divinylbenzene copolymer can suitably be used. In particular, a fluorine-containing ion exchange membrane is preferable due to excelling in terms of heat resistance, chemical resistance, and the like.

The fluorine-containing ion exchange membrane may, for example, be an ion exchange membrane that has a function of allowing selective permeation of ions produced during electrolysis and that contains a fluorine-containing polymer including ion exchange groups. Note that the fluorine-containing polymer including ion exchange groups that is referred to herein is a fluorine-containing polymer that includes ion exchange groups or ion exchange group precursors that can become ion exchange groups upon hydrolysis. For example, the fluorine-containing polymer may be a polymer that includes a hydrofluorocarbon main chain, that includes functional groups that are convertible to ion exchange groups through hydrolysis or the like as pendant side chains, and that can be melt processed.

((Zero-gap structure))

In each zero-gap electrolytic cell 65, it is preferable to adopt a configuration in which a spring (elastic body 2e) is disposed between an electrode 2 and the corresponding partition wall 1 and in which the electrode is supported by the spring as a means of reducing inter-electrode distance. For instance, in a first example, a spring made of a conductive material may be attached to the partition wall 1, and the electrode 2 may be attached to the spring. In a second example, a spring may be attached to electrode ribs 6 that are attached to the partition wall 1, and the electrode 2 may be attached to the spring. In the case of adopting such a configuration using an elastic body, it is necessary to appropriately adjust the strength of the spring, the number of springs, the shape, and the like, as necessary, so as not to introduce non-uniformity in the pressure of the electrode against the membrane.

Further, by strengthening the rigidity of the other electrode paired with the electrode supported via the elastic body (for example, by making the anode more rigid than the cathode), the other electrode is structured to have little deformation even when pressed. On the other hand, by providing the electrode supported via the elastic body with a flexible structure capable of deforming when pressed against the membrane, irregularities due to tolerance of fabrication accuracy of the electrolyzer, electrode deformation, and the like can be absorbed, and a zero-gap structure can be maintained.

More specifically, a structure of at least three layers may be adopted in which a current collector is attached at the tips of ribs (distributors) that are in electrical contact with a partition wall, a conductive elastic body is attached at an upper surface side of the current collector (i.e., at an opposite side to the partition wall side), and an electrode is stacked at an upper surface side thereof (i.e., at a part that is adjacent to the conductive elastic body and becomes the membrane side). The elastic body is composed by the current collector and the conductive elastic body.

The above-described zero-gap structure Z may, for example, be a gap structure formed between the anode terminal element 51a and an element, a gap structure formed between elements, or a gap structure formed between an element and the cathode terminal element 51c.

In each bipolar electrolytic cell 65 for alkaline water electrolysis according to the present embodiment, it is preferable that a conductive elastic body 2e and a cathode current collector 2r are provided between the cathode 2c and the partition wall 1 such that the conductive elastic body 2e is interposed between the cathode 2c and the cathode current collector 2r as illustrated in FIG. 2. Further, it is preferable that the cathode current collector 2r is in contact with cathode ribs 6.

As illustrated in FIG. 2, the zero-gap structure Z of each bipolar electrolytic cell 65 for alkaline water electrolysis according to the present embodiment is preferably a structure in which bipolar elements 60, each including: anode ribs 6 and an anode 2a stacked in this order at a side of a partition wall 1 corresponding to the anode 2a; and cathode ribs 6, a cathode collector 2r, a conductive elastic body 2e, and a cathode 2c stacked in this order at a side of the partition wall 1 corresponding to the cathode 2c, are stacked with a membrane 4 interposed therebetween, and in which the membrane 4 is in contact with the anode 2a and the cathode 2c.

-Current collector-

Examples of current collectors that may be used include a cathode current collector and an anode current collector.

The current collector transmits electricity to a conductive elastic body and/or electrode stacked thereon, supports the loads received from them, and has a role of allowing gas produced from the electrode to pass through to the partition wall side unhindered. Accordingly, the current collector is preferably in the form of an expanded metal, a punched porous plate, or the like. In this case, the open fraction of the current collector is preferably within a range allowing hydrogen gas produced from the electrode to escape to the partition wall side unhindered. However, if the open fraction is too high, problems such as reduced strength of the current collector and lower conductivity to the conductive elastic body may arise, and if the open fraction is too low, this may adversely affect gas escape.

Nickel, nickel alloy, stainless steel, mild steel, and the like can be used as the material of the current collector from perspectives of conductivity and alkali resistance, yet from the viewpoint of corrosion resistance, nickel and mild steel, stainless steel, and nickel alloy plated with nickel are preferred. A current collector such as described above may be secured to ribs by means such as spot welding and laser welding.

-Conductive elastic body-

A conductive elastic body is provided between a current collector and an electrode and essential requirements thereof are that the conductive elastic body transmits electricity to the electrode and does not hinder diffusion of gas produced from the electrode. This is because if diffusion of gas is hindered, electric resistance increases and the electrode area used for electrolysis decreases, resulting in lower electrolysis efficiency. The most important role of the conductive elastic body is to bring the membrane and the electrode into close contact with each other by evenly applying an appropriate pressure to the electrode so as not to damage the membrane.

Typical known conductive elastic bodies such as elastic bodies composed by wires may be used. For example, a cushion mat obtained through corrugation of woven nickel wires having a wire diameter of approximately 0.05 mm to 0.5 mm is preferable since it is easy to maintain a zero-gap structure therewith.

Although no limitations are placed on the material of the conductive elastic body, nickel, nickel alloy, and stainless steel or mild steel plated with nickel are preferable from perspectives of conductivity and alkali resistance.

The thickness of a conductive elastic body such as described above is normally approximately 1 mm to 20 mm.

The flexibility of the conductive elastic body may be within a known range. For example, the elasticity may be such that repulsive force under 50% compressive deformation is 30 g/cm$^2$ to 300 g/cm$^2$. A conductive elastic body such as described above may be used in a stacked form on a current collector formed by a conductive plate. The method of attachment may be a typical known method such as appropriate fixing by spot welding, attachment using pins made of resin or wires made of metal, or the like.

The repulsive force under 50% compressive deformation can be measured in accordance with JIS K6400. For example, a desktop-type precision universal tester (model no.: AGS-1kNX) produced by Shimadzu Corporation may be used in compression test mode at normal temperature and atmospheric pressure.

An electrode may be stacked directly on the conductive elastic body. Alternatively, an electrode may be stacked on the conductive elastic body with a separate conductive sheet interposed therebetween.

The conductivity of the conductive elastic body may, for example, be a level such that electrical resistivity measured by a tester, a digital multimeter, or the like is $1 \times 10^{-5}$ $\Omega \cdot$m to $1 \times 10^{-9}$ $\Omega \cdot$m.

Examples of preferable methods of fixing the electrode for achieving a zero-gap structure include spot welding with the conductive elastic body, fixing with pins made of metal or plastic, and pressing pressure through elasticity of the conductive elastic body.

In general, the thickness of the electrode is preferably approximately 0.7 mm to 3 mm. If the electrode is too thin, the electrode may be deformed by pressure difference between the anode compartment and the cathode compartment or by pressing pressure, and this may, for example, lead to depression of an end part of the electrode, widening of the inter-electrode distance, and increased voltage.

-Electrode compartments-

In the bipolar electrolyzer 50 according to the present embodiment, the partition walls 1, the outer frames 3, and the membranes 4 define electrode compartments 5 through which electrolyte passes as illustrated in FIG. 2. Each partition wall 1 is sandwiched between an electrode compartment 5 at the anode side thereof (i.e., an anode compartment 5a) and an electrode compartment 5 at the cathode side thereof (i.e., a cathode compartment 5c).

In the present embodiment, a header pipe of the bipolar electrolyzer may be disposed as an internal header or an external header (FIG. 3). In the example illustrated in FIG. 3, spaces occupied by the anode and the cathode themselves may be spaces inside the respective electrode compartments, for example. Moreover, particularly in the example illustrated in FIG. 3, a gas-liquid separation box is provided, and space occupied by the gas-liquid separation box may also be space inside the electrode compartments.

-Ribs-

In each bipolar electrolytic cell 65 for alkaline water electrolysis according to the present embodiment, it is preferable that ribs 6 are physically connected to the electrodes 2. With this configuration, the ribs 6 serve as supports for the electrodes 2, making it easier to maintain the zero-gap structure Z.

For each of the ribs, an electrode may be disposed thereon, or a current collector, a conductive elastic body, and an electrode may be disposed thereon in this order.

In the previously described example of a bipolar electrolytic cell for alkaline water electrolysis, a structure in which cathode ribs, a cathode current collector, a conductive elastic body, and a cathode are stacked in this order is adopted in the cathode compartment, whereas a structure in which anode ribs and an anode are stacked in this order is adopted in the anode compartment.

Note that although a "cathode ribs/cathode current collector/conductive elastic body/cathode" structure is adopted in the cathode compartment and an "anode ribs/anode" structure is adopted in the anode compartment in the previously described example of a bipolar electrolytic cell for alkaline water electrolysis, this is not a limitation in the present disclosure and an "anode ribs/anode current collector/conductive elastic body/anode" structure may also be adopted in the anode compartment.

In more detail, the ribs 6 (anode ribs or cathode ribs) are preferably attached to the corresponding partition wall 1 as illustrated in FIGS. 2 and 3 in the bipolar electrolytic cell for alkaline water electrolysis according to the present embodiment.

The ribs (anode ribs and cathode ribs) preferably have a role of transmitting current from the partition wall to the anode or cathode in addition to having a role of supporting the anode or cathode.

In the bipolar electrolytic cell for alkaline water electrolysis according to the present embodiment, it is preferable that at least part of the ribs is conductive, and more preferable that the whole of the ribs is conductive. This configuration can inhibit a rise in cell voltage due to electrode deflection.

Although no particular limitations are placed on the material of the ribs other than being a durable and strong material, a conductive metal is typically used. For example, nickel-plated mild steel, stainless steel, nickel, or the like may be used. In particular, it is preferable that the material of the ribs is the same as the material of the partition walls, and most preferable that nickel is used as the material of the ribs.

-Gasket-

In each bipolar electrolytic cell 65 for alkaline water electrolysis according to the present embodiment, it is preferable that between the outer frames 3 bordering the partition walls 1, a gasket 7 is sandwiched together with the membrane 4.

The gasket 7 is used for providing a seal against electrolyte and produced gas between each of the bipolar elements 60 and the membrane 4 and between the bipolar elements 60, and can prevent leakage of electrolyte and produced gas to the outside of the electrolyzer and gas mixing between the electrode compartments.

The material of the gasket is not particularly limited, and a known rubber material, resin material, or the like that is an electrical insulator may be selected.

Specific examples of such rubber and resin materials include: rubber materials such as natural rubber (NR), styrene butadiene rubber (SBR), chloroprene rubber (CR), butadiene rubber (BR), acrylonitrile-butadiene rubber (NBR), silicone rubber (SR), ethylene-propylene rubber (EPT), ethylene-propylene-diene rubber (EPDM), fluororubber (FR), isobutylene-isoprene rubber (IIR), urethane rubber (UR), and chlorosulfonated polyethylene rubber (CSM); fluororesin materials such as polytetrafluoroethylene (PTFE), tetrafluoroethylene-perfluoroalkyl vinyl ether copolymer (PFA), tetrafluoroethylene-ethylene copolymer (ETFE), and chlorotrifluoroethylene-ethylene copolymer (ECTFE); and other resin materials such as polyphenylene sulfide (PPS), polyethylene, polyimide, and polyacetal. Of these, ethylene-propylene-diene rubber (EPDM) and fluororubber (FR) are particularly suitable from viewpoints of elastic modulus and alkali resistance.

A reinforcing material may be embedded in the gasket. This can inhibit squashing of the gasket upon pressing when sandwiched between frames during stacking and makes it easier to prevent damage of the gasket.

A known metal material, resin material, carbon material, or the like can be used as such a reinforcing material. Specific examples include metals such as nickel and stainless steel, resins such as nylon, polypropylene, PVDF, PTFE, and PPS, and carbon materials such as carbon particles and carbon fiber.

The thickness of the gasket is not particularly limited and may be designed in accordance with the material and elastic modulus of the gasket and the cell area. The thickness is preferably within a range of 0.5 mm to 10 mm, and more preferably within a range of 1.0 mm to 5 mm. In a case in which a protruding part is provided, the height of the protruding part is not particularly limited but is preferably 0.5 mm to 5 mm in order to achieve sufficient pressing pressure.

The elastic modulus of the gasket is not particularly limited and may be designed in accordance with the electrode material and the cell area. The elastic modulus is preferably within a range of 0.20 MPa to 20 MPa in terms of tensile stress during 100% deformation, and is more preferably within a range of 1.0 MPa to 10 MPa from viewpoints of sealing properties and cell strength in stacking.

The tensile stress can be measured in accordance with JIS K6251. For example, an Autograph AG produced by Shimadzu Corporation may be used.

An adhesive may be used in attachment of the gasket to an element. An adhesive may be applied to one surface of the gasket and then be attached to the outer frame at one side of the element. Note that it is preferable that after drying the adhesive, water is applied onto the electrode surface of the element so as to wet the electrode. In the case of a gasket including a slit for housing the edge of the membrane in order that the membrane can be held, the gasket may be attached in a state in which the membrane is held thereby, or may be attached and subsequently used to hold the membrane.

-Header-

The electrolyzer for alkaline water electrolysis preferably comprises a cathode compartment and an anode compartment for each electrolytic cell. In order to conduct an electrolysis reaction continuously in the electrolyzer, it is necessary to continuously supply an electrolyte that contains a sufficient amount of material to be consumed by electrolysis into the cathode compartment and the anode compartment of each electrolytic cell.

The electrolytic cell is connected to an electrolyte supply/discharge plumbing system, called a header, shared by a plurality of electrolytic cells. In general, the anode distribution pipe is called an anode inlet header, the cathode distribution pipe is called a cathode inlet header, the anode collection pipe is called an anode outlet header, and the cathode collection pipe is called a cathode outlet header. Each element is connected to each electrolyte distribution pipe and each electrolyte collection pipe through a hose or the like.

Although the material of the header is not particularly limited, it is necessary to adopt a material that can sufficiently withstand corrosive properties of the electrolyte that is to be used, operating conditions such as pressure and temperature, and so on. The material of the header may be iron, nickel, cobalt, PTFE, ETFE, PFA, polyvinyl chloride, polyethylene, or the like.

In the present embodiment, the extent of each electrode compartment varies depending on the detailed structure of the outer frame disposed at the periphery of the partition wall, and the detailed structure of the outer frame varies depending on the form of arrangement of the header (pipe for electrolyte distribution or collection) attached to the outer frame. Representative examples of forms of arrangement of the header of a bipolar electrolytic cell are an internal header type and an external header type.

-Internal header-

The internal header is a type in which a bipolar electrolyzer and a header (pipe for electrolyte distribution or collection) have a unified structure.

More specifically, in an internal header-type bipolar electrolyzer, an anode inlet header 10ai and a cathode inlet header lOci are disposed at a lower part inside the partition wall 1 and/or outer frame 3 and extend in a direction perpendicular to the partition wall 1, whereas an anode outlet header 10ao and a cathode outlet header lOco are disposed at an upper part inside the partition wall 1 and/or outer frame 3 and extend in a direction perpendicular to the partition wall 1.

The anode inlet header, cathode inlet header, anode outlet header, and cathode outlet header that are included inside an internal header-type bipolar electrolyzer are referred to collectively as an internal header 10i.

In an example of the internal header type, an anode inlet header and a cathode inlet header are included in part of a lower part of the outer frame disposed at the periphery of the partition wall, and similarly, an anode outlet header and a cathode outlet header are included in part of an upper part of the outer frame disposed at the periphery of the partition wall. The outer frame and the anode compartment or the cathode compartment are connected to each other at an electrolyte inlet or an electrolyte outlet through which electrolyte passes.

-External header-

The external header type is a type in which a bipolar electrolyzer and a header (pipe for electrolyte distribution or collection) are separate.

In the case of an external header-type bipolar electrolyzer, an anode inlet header and a cathode inlet header are separately provided in a manner such as to run alongside the electrolyzer in a direction perpendicular to the current-carrying surface of the electrolyzer. The anode inlet header and the cathode inlet header are connected to each element by a hose.

The anode inlet header, cathode inlet header, anode outlet header, and cathode outlet header that are externally connected to the external header-type bipolar electrolyzer are collectively referred to as an external header.

In the example of an external header type illustrated in FIG. 3, lumen-like members are provided at header through-holes in a lower part of an outer frame 3 disposed at the periphery of a partition wall 1, and these lumen-like members are connected to an anode inlet header 10ai and a cathode inlet header lOci. Likewise, lumen-like members (for example, a hose or a tube) are provided at header through-holes in an upper part of the outer frame 3 disposed at the periphery of the partition wall 1, and these lumen-like members are connected to an anode outlet header 10ao and a cathode outlet header lOco.

The bipolar electrolyzer of inner header type or outer header type may include a gas-liquid separation box for separating electrolyte and gas produced by electrolysis inside the bipolar electrolyzer. The installation position of the gas-liquid separation box is not particularly limited, and the gas-liquid separation box may be installed between the anode compartment and the anode outlet header, or between the cathode compartment and the cathode outlet header.

The surface of the gas-liquid separation box may be coated with a coating material that can sufficiently withstand corrosive properties of the electrolyte and operating conditions such as pressure and temperature. An electrically insulating material may be adopted as the coating material with the objective of increasing electric resistance of a leakage current circuit inside the electrolyzer. For example, EPDM, PTFE, ETFE, PFA, polyvinyl chloride, polyethylene, or the like may be adopted as the coating material.

((Electrolyte))

In the bipolar electrolyzer according to the present embodiment, a cathode compartment frame to which a cathode is attached and an anode compartment frame to which an anode is attached are arranged via a partition wall. That is, the anode compartment and the cathode compartment are partitioned by a partition wall. An electrolyte is supplied to the anode compartment and the cathode compartment.

Electrolytes that are commonly used for water electrolysis may be used as the electrolyte. Examples thereof include a potassium hydroxide aqueous solution and a sodium hydroxide aqueous solution. Further, the concentration of the electrolyte is preferably not less than 1 N and not more than 12 N, and more preferably not less than 6 N and not more than 10 N.

((Alkaline water electrolysis method))

Next, a method for producing hydrogen by alkaline water electrolysis using the bipolar electrolyzer according to the present embodiment will be described.

In the present embodiment, a current is applied to the bipolar electrolyzer which has anodes and cathodes such as as described above and in which electrolyte is circulated, and in this manner, hydrogen is produced at the cathodes. A variable power supply, for example, can be used as the power supply when applying this current. A variable power supply is a power supply that originates from a renewable energy power station and has an output that fluctuates in increments of several seconds to several minutes, unlike a power supply with stable output, such as grid power. The method of renewable energy generation is not particularly limited and may, for example, be solar power generation or wind power generation.

For example, in the case of electrolysis using a bipolar electrolyzer, a cationic electrolyte in the electrolyte moves from the anode compartment of an element, and passes through a membrane to the cathode compartment of an adjacent element, whereas an anionic electrolyte moves from the cathode compartment of an element, and passes through a membrane to the anode compartment of an adjacent element. In this way, the current during electrolysis will flow along the direction in which the elements are connected in series. That is, the current flows from the anode compartment of one element to the cathode compartment of an adjacent element via a membrane. Through the electrolysis, oxygen gas is produced in the anode compartment, and hydrogen gas is produced in the cathode compartment.

The bipolar electrolytic cell 65 for alkaline water electrolysis according to the present embodiment can be used for the bipolar electrolyzer 50, an electrolysis device 70 for alkaline water electrolysis, or the like. The electrolysis device 70 for alkaline water electrolysis may, for example, be a device comprising the bipolar electrolyzer 50 according to the present embodiment, a feed pump 71 for circulating electrolyte, a gas-liquid separation tank 72 for separating electrolyte from hydrogen and/or from oxygen, and a water replenisher for replenishing water consumed by electrolysis.

The electrolysis device for alkaline water electrolysis may further comprise other components such as a rectifier 74, an oxygen concentration meter 75, a hydrogen concentration meter 76, a flow meter 77, a pressure gauge 78, a heat exchanger 79, and a pressure control valve 80.

In the alkaline water electrolysis method using the electrolysis device for alkaline water electrolysis described above, the current density applied to the electrolytic cells is preferably 4 kA/m$^2$ to 20 kA/m$^2$, and more preferably 6 kA/m$^2$ to 15 kA/m$^2$.

In particular, when a variable power supply is used, it is preferable that the upper limit of the current density is kept within any of the ranges set forth above.

A bipolar electrolytic cell for alkaline water electrolysis and bipolar electrolyzer according to an embodiment of the present disclosure have been described above with reference to the accompanying drawings. However, the bipolar electrolytic cell for alkaline water electrolysis and bipolar electrolyzer according to the present disclosure are not limited to the examples described above, and the embodiment set forth above may be altered as appropriate.

EXAMPLES

The following describes the present disclosure in more detail through examples. However, the present disclosure is not in any way limited by the following examples.

(Example 1)

An electrolytic cell for alkaline water electrolysis and a bipolar electrolyzer were prepared as described below.

-Partition wall and outer frame-

An element including a partition wall partitioning an anode and a cathode and including an outer frame bordering the partition wall was used as a bipolar element. Those members in contact with electrolyte such as the partition wall and the frame of the bipolar element were all made of nickel.

-Anode-

A suspension was prepared by mixing and stirring 100 parts by mass of nickel oxide powder having a particle diameter of 0.2 $\mu$m to 2 $\mu$m, 2.25 parts by mass of gum arabic, 0.7 parts by mass of carboxymethylcellulose, 0.001 parts by mass of sodium lauryl sulfate, and 100 parts by mass of water. A spray drying granulator was used to prepare a granulated product of 5 $\mu$m to 50 $\mu$m in diameter from the suspension.

The granulated product was sprayed onto both sides of a conductive substrate by plasma spraying. The conductive substrate was a nickel expanded metal substrate that had been subjected to blasting in advance. The substrate had a thickness of 1 mm and an open fraction of 54%. The thickness of a catalyst layer precursor coating a front surface of the conductive substrate was adjusted to 240 $\mu$m. The thickness of a catalyst layer precursor coating a rear surface of the conductive substrate was adjusted to 160 $\mu$m. This electrode was set in a quartz tube. The quartz tube was inserted into a tubular furnace, the inside of the quartz tube was heated to 200°C, and a stream of hydrogen was continuously supplied into the quartz tube for 2 hours in order to reduce the catalyst layer precursor. Through the process described above, an anode of 1.5 mm in thickness that included a conductive substrate and a catalyst layer coating the conductive substrate was obtained.

-Cathode-

A plain weave mesh substrate obtained by knitting fine wires of nickel having a diameter of 0.15 mm with a mesh opening of 40 mesh was used as a conductive substrate.

A palladium nitrate solution (produced by Tanaka Kikinzoku Kogyo K.K.; palladium concentration: 100 g/L) and a dinitrodiammine platinum nitric acid solution (produced by Tanaka Kikinzoku Kogyo K.K.; platinum concentration: 100 g/L) were mixed at a molar ratio of palladium to platinum of 1:1 to prepare a coating liquid.

The coating liquid was applied onto the conductive substrate by dipping and was heated and sintered for 10 minutes at 500°C. Two cycles of application and sintering were carried out to form a catalyst layer containing palladium and platinum, and thereby obtain a cathode.

-Conductive elastic body-

A body obtained by weaving nickel wires of 0.15 mm in diameter and then performing corrugation to obtain a corrugation height of 5 mm was used as a conductive elastic body. The conductive elastic body had a thickness of 5 mm, a repulsive force at 50% compressive deformation of 150 g/cm$^2$, and a mesh opening of about 5 mesh.

-Membrane-

Zirconium oxide (product name: EP Zirconium Oxide; produced by Daiichi Kigenso Kagaku Kogyo Co., Ltd.) and N-methyl-2-pyrrolidone (produced by Wako Pure Chemical Industries, Ltd.) were loaded into a ball mill pot containing SUS (stainless steel) balls of 0.5 mm in diameter. These materials were stirred together in a 25°C atmosphere at a rotation speed of 70 rpm for 3 hours and dispersed to obtain a mixture. The resulting mixture was filtered through a stainless steel mesh (mesh count: 30 mesh) to separate the balls from the mixture. Polysulfone (Udel® (Udel is a registered trademark in Japan, other countries, or both) produced by Solvay Advanced Polymers) and polyvinylpyrrolidone (produced by Wako Pure Chemical Industries, Ltd.; weight-average molecular weight (Mw): 900,000) were added to the mixture from which the balls had been separated, and were stirred therewith for 12 hours at 60°C using a three-one motor to cause dissolution and obtain a coating liquid having the following composition.
Polysulfone: 15 parts by mass
Polyvinylpyrrolidone: 6 parts by mass
N-Methyl-2-pyrrolidone: 70 parts by mass
Zirconium oxide: 45 parts by mass

The coating liquid was applied to both sides of a polyphenylene sulfide mesh (produced by Clever Co., Ltd.; thickness: 280 $\mu$m; mesh opening: 358 $\mu$m; fiber diameter: 150 $\mu$m) serving as a substrate using a comma coater to obtain a coating thickness of 150 $\mu$m at each side. Immediately after the coating, the substrate coated with the coating liquid was exposed to vapor from a coagulation bath holding a pure water/isopropanol mixture (produced by Wako Pure Chemical Industries, Ltd.; pure water/isopropanol = 50/50 (v/v)) at 30°C for 2 minutes. Immediately thereafter, the substrate coated with the coating liquid was immersed in the coagulation bath for 4 minutes. A coating film was formed on the surface of the substrate through coagulation of polysulfone. Thereafter, the coating film was thoroughly rinsed with pure water to obtain a porous membrane.

The average pore diameter of this porous membrane was 0.3 $\mu$m in terms of average pore diameter for water permeation at 90°C. The thickness was 580 $\mu$m. The porosity was 43%. The mode diameter of $ZrO_2$ was 5.0 $\mu$m. The ratio of the mode diameter of inorganic particles to the average pore diameter of the porous membrane (mode diameter/average pore diameter) was 2.6.

-Gasket-

A gasket that was used had a quadrangular shape with a thickness of 4.0 mm, a width of 18 mm, and an inner size of 504 mm square, had an opening having the same dimensions as an electrode compartment in plan view at the inside thereof, and had a slit structure for holding the membrane through insertion of the membrane. In the slit structure, a gap of 0.4 mm was provided at the center portion in the thickness direction of the inner wall of the opening to hold a membrane by inserting the partition wall therein. This gasket was made of EPDM rubber and had a tensile stress at 100% deformation of 4.0 MPa.

-Zero-gap bipolar element-

A zero-gap cell unit 60 of external header type had a rectangular shape of 540 mm × 620 mm, and the area of the current-carrying surface of an anode 2a and a cathode 2c was 500 mm × 500 mm. On the cathode side of the zero-gap bipolar element 60, a cathode 2c, a conductive elastic body 2e, and a cathode current collector 2r are stacked on one another and connected to a partition wall 1 via cathode ribs 6, and a cathode compartment 5c in which electrolyte flows is present. On the anode side of the zero-gap bipolar element 60, an anode 2a is connected to the partition wall 1 via anode ribs 6, and an anode compartment 5a in which electrolyte flows is present (FIG. 2).

The depth of the anode compartment 5a (anode compartment depth; distance between partition wall and anode in FIG. 2) was 25 mm, the depth of the cathode compartment 5c (cathode compartment depth; distance between partition wall and cathode current collector in FIG. 2) was 25 mm, and the material was nickel. The nickel partition wall 1 to which anode ribs 6 made of nickel (height: 25 mm; thickness: 1.5 mm) and cathode ribs 6 made of nickel (height: 25 mm; thickness: 1.5 mm) were attached by welding had a thickness of 2 mm.

A nickel expanded metal substrate that had been subjected to blasting in advance was used as a current collector for the cathode current collector 2r. The substrate had a thickness of 1 mm and an open fraction of 54%. The conductive elastic body 2e was fixed by spot welding on the cathode current collector 2r. By stacking such zero-gap bipolar elements on one another via a gasket holding a membrane, it is possible to form a zero-gap structure Z in which an anode 2a and a cathode 2c are pressed against the membrane 4.

(Example 2)

A zero-gap bipolar element was produced in the same way as in Example 1 with the exception that the cathode described below was used.

-Cathode-

A cathode was prepared in the same way as in Example 1 with the exception that a palladium nitrate solution (produced by Tanaka Kikinzoku Kogyo K.K.; palladium concentration: 100 g/L) was used as the coating liquid.

(Example 3)

A zero-gap bipolar element was produced in the same way as in Example 1 with the exception that the anode described below was used.

-Anode-

A nickel expanded metal substrate that had been subjected to blasting was used. The thickness of the substrate was 1 mm.

(Example 4)

A zero-gap bipolar element was produced in the same way as in Example 1 with the exception that the cathode in Example 2 was used as the cathode and the anode in Example 3 was used as the anode.

(Example 5)

A zero-gap cell unit was produced in the same way as in Example 1 with the exception that the anode and the cathode described below were used.

-Anode-

An anode was produced by the same method as the anode in Example 1 with the exception that a nickel expanded metal substrate having a thickness of 1.0 mm and an open fraction of 28% was used as the conductive substrate.

-Cathode-

A cathode was produced by the same method as the cathode in Example 1 with the exception that a nickel expanded metal substrate having a thickness of 1.0 mm and an open fraction of 28% was used as the conductive substrate.

(Comparative Example 1)

A zero-gap bipolar element was produced in the same way as in Example 1 with the exception that the cathode described below was used.

-Cathode-

A plain weave mesh substrate obtained by knitting fine wires of nickel having a diameter of 0.15 mm with a mesh opening of 40 mesh was subjected to blasting using alumina powder having a weight-average particle diameter of 100 $\mu$m or less, was subsequently acid treated for 5 minutes at room temperature in 6 N hydrochloric acid, and was then rinsed with water and dried to prepare a cathode.

(Comparative Example 2)

A zero-gap bipolar element was produced in the same way as in Example 1 with the exception that the anode described below and the same type of cathode as in Comparative Example 1 were used.

-Anode-

An immersion liquid was prepared by adding 5 parts by mass of 28% ammonia water to 200 parts by mass of water, and subsequently adding 20 parts by mass of 1% rhodium chloride aqueous solution. This immersion liquid was heated to 50°C. The anode in Example 1 was immersed in the immersion liquid such that the anode became impregnated with the immersion liquid. The electrode was pulled out of the immersion liquid and was air dried at 60°C to obtain a thermal spray reduced Ni anode that was surface modified with rhodium. The coating weight per unit area of rhodium was 10 g/m$^2$.

(Comparative Example 3)

A zero-gap bipolar element was produced in the same way as in Example 1 with the exception that the membrane described below was used.

-Membrane-

A Plastomill produced by Toyo Seiki Seisaku-Sho, Ltd. was used to perform heated mixing (kneading) of polyethylene powder SH810 (produced by Asahi Kasei Corporation) and UH950 (produced by Asahi Kasei Corporation), $ZrO_2$ particles, liquid paraffin plasticizer (Smoil P-350P® (Smoil P-350P is a registered trademark in Japan, other countries, or both) produced by Matsumura Oil Research Corp.), pentaerythrityl-tetrakis[3-(3,5-di-t-butyl-4-hydroxyphenyl)propionate] as an antioxidant, and calcium stearate as a lubricant. The heated mixing was performed for 10 minutes with the Plastomill set to a temperature of 200°C and a rotation speed of 50 rpm. The molten mixture was removed from the Plastomill, and the resultant solution having the composition shown below was cooled to obtain a solidified product. The solidified product was sandwiched between metal plates with a polyimide film interposed therebetween, and was compressed at 10 MPa using a heat press set to 200°C to prepare a sheet of 10 mm in thickness. The obtained sheet was subjected to simultaneous biaxial stretching by 7 times in a length direction and 7 times in a width direction at 120°C. The resultant stretched sheet was immersed in methylene chloride in order to remove the plasticizer while in a state in which the four sides thereof were secured by a stainless steel frame. Thereafter, the sheet was dried at room temperature to remove methylene chloride and thereby obtain a microporous membrane for use as a membrane.

SH810: 29 parts by mass
UH950: 20 parts by mass
$ZrO_2$ particles: 51 parts by mass
Smoil P-350P: 150 parts by mass
Pentaerythrityl-tetrakis[3-(3,5-di-t-butyl-4-hydroxyphenyl)propionate ]: 0.2 parts by mass
Calcium stearate: 0.4 parts by mass

(Comparative Example 4)

A zero-gap bipolar element was produced in the same way as in Example 1 with the exception that the membrane described below was used.

-Membrane-

A bipolymer (EW: 950; MI: 20) of a fluorinated vinyl compound represented by a general formula $CF_2=CF-O(CF_2CFCF_3O)-(CF_2)_2-SO_2F$ and a fluorinated olefin represented by a general formula $CF_2=CF_2$ as a fluorine-containing ion exchange resin precursor was used to form a film of 32 μm in thickness by a T-die method so as to obtain a precursor membrane. The obtained precursor membrane was immersed for 1 hour in a hydrolysis bath (DMSO:KOH:water = 5:30:65) that had been heated to 95°C to obtain a fluorine-containing ion exchange membrane having metal salt-type ion exchange groups. The membrane was thoroughly rinsed with water and was subsequently immersed for 15 minutes in a 2 N hydrochloric acid bath that had been heated to 65°C to obtain a fluorine-containing ion exchange membrane having acid-type ion exchange groups. This membrane was thoroughly rinsed with water and was subsequently dried. The dried membrane was removed from restraints and the resultant fluorine-containing ion exchange membrane was used as a membrane.

[Evaluation]

(Anode overvoltage ηa)

An anode was cut out as 2 cm × 2 cm and was secured to a nickel rod coated by PTFE using nickel screws. A platinum mesh was used as a counter electrode in order to perform electrolysis with a current density of 0.6 A/cm$^2$ in 32 wt% sodium hydroxide aqueous solution at 80°C, and thereby measure the oxygen overvoltage. The oxygen overvoltage was measured by a three-electrode method using a Luggin capillary in order to eliminate the influence of ohmic loss due to liquid resistance. The interval between a tip of the Luggin capillary and the anode was fixed constantly at 1 mm. The device used in measurement of the oxygen overvoltage was a potentiostat/galvanostat "1470E system" produced by Solartron Analytical. Silver-silver chloride (Ag/AgCl) was used as a reference electrode in the three-electrode method. Ohmic loss that could not be eliminated by the three-electrode method was measured by an AC impedance method, and the oxygen overvoltage was corrected based on the measured value for ohmic loss. The ohmic loss was measured using a frequency characteristic analyzer "1255B" produced by Solartron Analytical.

Note that I in formula (1) was taken to be a current density of 6 kA/m$^2$ in measurement of the overvoltage of the anode.

(Cathode overvoltage ηc)

A cathode was cut out as 2 cm × 2 cm and was secured to a nickel rod coated by PTFE using nickel screws. A platinum mesh was used as a counter electrode in order to perform electrolysis with a current density of 0.6 A/cm$^2$ in 32 wt% sodium hydroxide aqueous solution at 80°C, and thereby measure the hydrogen overvoltage. The hydrogen overvoltage was measured by a three-electrode method using a Luggin capillary in order to eliminate the influence of ohmic loss due to liquid resistance. The interval between a tip of the Luggin capillary and the cathode was fixed constantly at 1 mm. The device used in measurement of the hydrogen overvoltage was a potentiostat/galvanostat "1470E system" produced by Solartron Analytical. Silver-silver chloride (Ag/AgCl) was used as a reference electrode in the three-electrode method. Ohmic loss that could not be eliminated by the three-electrode method was measured by an AC impedance method, and the hydrogen overvoltage was corrected based on the measured value for ohmic loss. The ohmic loss was measured using a frequency characteristic analyzer "1255B" produced by Solartron Analytical.

Note that I in formula (2) was taken to be a current density of 6 kA/m$^2$ in measurement of the overvoltage of the cathode.

(Electrode specific heat Ca and Cc)

Approximately 20 mg of an electrode was cut out and the specific heat (J/kg·K) thereof was measured using a differential scanning calorimeter DSC8230 (produced by Rigaku Corporation).

(Electrode area density Da and Dc)

An electrode of 8 cm × 17 cm in size was cut out, the weight of the cut-out electrode was measured using an electronic balance PG503-S (produced by Mettler Toledo), and the electrode area density (kg/m$^2$) was calculated.

(Electrode open fraction)

An electrode having an expanded metal as a substrate was cut out to a size of approximately 5 mm × 5 mm. A desktop microscope Miniscope TM3000 (produced by Hitachi High-Technologies Corporation) was used to measure the short way SW, the long way LW, the bond length B, the short way of opening SWO, and the long way of opening LWO. These values were used to calculate the open fraction according to the following formula.

$$\text{Open fraction} = \text{SWO} \times (\text{LWO} + \text{B}) \times 100/(\text{SW} \times \text{LW})$$

The TM3000 was also used to measure the opening size A and wire diameter d of an electrode having a plain weave mesh as a substrate in the same manner. The open fraction (%) was calculated according to the following formula.

$$\text{Open fraction} = (\text{A}/(\text{A} + \text{d}))^2 \times 100$$

The method of calculating the electrode open fraction differs for an electrode having an expanded metal as a substrate and an electrode having a plain weave mesh as a substrate. Note that the open fraction of an electrode having a substrate other than an expanded metal or a plain weave mesh can be calculated according to the following formula by cutting out the electrode as a certain size (for example, approximately 5 mm × 5 mm), setting the electrode horizontally, irradiating a central portion of the electrode with light from above in a vertical direction, projecting the electrode downward in a vertical direction, and then measuring the total area of a portion where light is transmitted and a projected area of the electrode (total of areas of shadow and transmitted light).

$$\text{Open fraction} = (\text{Total area of portion where light is transmitted})/(\text{Projected area of electrode}) \times 100$$

(Membrane linear expansion coefficient)

A membrane was cut to 15 mm in length and 10 mm in width, thermal expansion of the membrane from 27°C to 100°C was measured using a thermomechanical analyzer TMA-60 produced by Shimadzu Corporation, and the linear expansion coefficient (K/sec) of the membrane was calculated.

(Membrane thermal conductivity)

For each membrane, a sample was prepared by stacking a number of such membranes to reach a thickness of 1 mm to 1.5 mm. The sample was then used in measurement of thermal conductivity (W/m·K) using a KES-F7 Thermo Labo II Precise and Fast Thermal Property-Measuring Instrument produced by Kato Tech Co., Ltd.

(Electrolysis test)

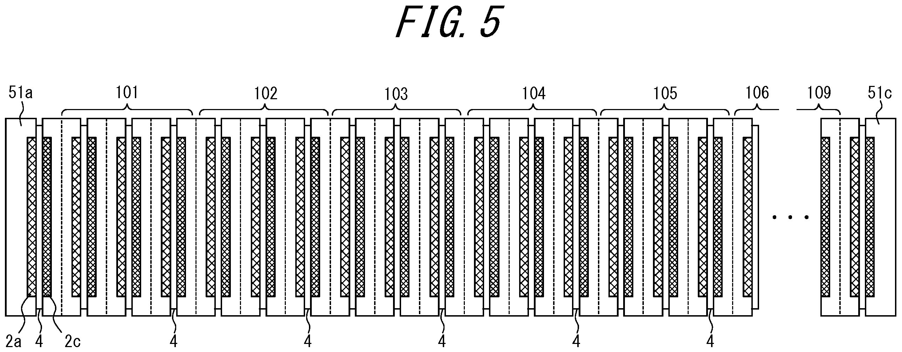

A bipolar electrolyzer stacked in the order illustrated in FIG. 5 was prepared.

Stacking was performed in an order of: anode terminal cell unit 51a in which anode of Example 1 was used; membrane of Example 1; section in which three zero-gap bipolar elements of Example 1 were stacked with membranes of Example 1 interposed therebetween; membrane of Example 1; bipolar element including cathode of Example 1 and anode of Example 2; membrane of Example 2; section in which two zero-gap bipolar elements of Example 2 were stacked with membrane of Example 2 interposed therebetween; membrane of Example 2; bipolar element including cathode of Example 2 and anode of Example 3; membrane of Example 3; section in which two zero-gap bipolar elements of Example 3 were stacked with membrane of Example 3 interposed therebetween; membrane of Example 3; bipolar element including cathode of Example 3 and anode of Example 4; membrane of Example 4; section in which two zero-gap bipolar elements of Example 4 were stacked with membrane of Example 4 interposed therebetween; membrane of Example 4; bipolar element including cathode of Example 4 and anode of Example 5; membrane of Example 5; section in which two zero-gap bipolar elements of Example 5 were stacked with membrane of Example 5 interposed therebetween; membrane of Example 5; bipolar element including cathode of Example 5 and anode of Comparative Example 1; membrane of Comparative Example 1; section in which two zero-gap bipolar elements of Comparative Example 1 were stacked with membrane of Comparative Example 1 interposed therebetween; membrane of Comparative Example 1; bipolar element including cathode of Comparative Example 1 and anode of Comparative Example 2; membrane of Comparative Example 2; section in which two zero-gap bipolar elements of Comparative Example 2 were stacked with membrane of Comparative Example 2 interposed therebetween; membrane of Comparative Example 2; bipolar element including cathode of Comparative Example 2 and anode of Comparative Example 3; membrane of Comparative Example 3; section in which two zero-gap bipolar elements of Comparative Example 3 were stacked with membrane of Comparative Example 3 interposed therebetween; membrane of Comparative Example 3; bipolar element including cathode of Comparative Example 3 and anode of Comparative Example 4; membrane of Comparative Example 4; section in which two zero-gap bipolar elements of Comparative Example 4 were stacked with membrane of Comparative Example 4 interposed therebetween; membrane of Comparative Example 4; bipolar element including cathode of Comparative Example 4 and anode of Example 1; membrane of Example 1; cathode terminal cell 51c in which cathode of Example 1 was used.

An electrolysis device was prepared using the bipolar electrolyzer illustrated in FIG. 5 which included: three electrolytic cells 101 (zero-gap structure) in which the membrane of Example 1 was in contact with the anode of Example 1 and the cathode of Example 1; three electrolytic cells 102 (zero-gap structure) in which the membrane of Example 2 was in contact with the anode of Example 2 and the cathode of Example 2; three electrolytic cells 103 (zero-gap structure) in which the membrane of Example 3 was in contact with the anode of Example 3 and the cathode of Example 3; three electrolytic cells 104 (zero-gap structure) in which the membrane of Example 4 was in contact with the anode of Example 4 and the cathode of Example 4; three electrolytic cells 105 (zero-gap structure) in which the membrane of Example 5 was in contact with the anode of Example 5 and the cathode of Example 5; three electrolytic cells 106 (zero-gap structure) in which the membrane of Comparative Example 1 was in contact with the anode of Comparative Example 1 and the cathode of Comparative Example 1; three electrolytic cells 107 (zero-gap structure) in which the membrane of Comparative Example 2 was in contact with the anode of Comparative Example 2 and the cathode of Comparative Example 2; three electrolytic cells 108 (zero-gap structure) in which the membrane of Comparative Example 3 was in contact with the anode of Comparative Example 3 and the cathode of Comparative Example 3; and three electrolytic cells 109 (zero-gap structure) in which the membrane of Comparative Example 4 was in contact with the anode of Comparative Example 4 and the cathode of Comparative Example 4.

The electrolysis device comprises a bipolar electrolyzer 50, a feed pump 71 for circulating electrolyte, and gas-liquid separation tanks 72 for separating electrolyte from hydrogen and/or oxygen. A 30% KOH aqueous solution serving as the electrolyte is sealed in the gas-liquid separation tanks 72 and the bipolar electrolyzer 50. Electrolyte is circulated through the anode compartments 5a of the bipolar electrolyzer 50, the anode gas-liquid separation tank 72, and the anode compartments 5a and through the cathode compartments 5c of the bipolar electrolyzer 50, the cathode gas-liquid separation tank 72, and the cathode compartments 5c using the feed pump 71. The temperature was adjusted to 90°C.

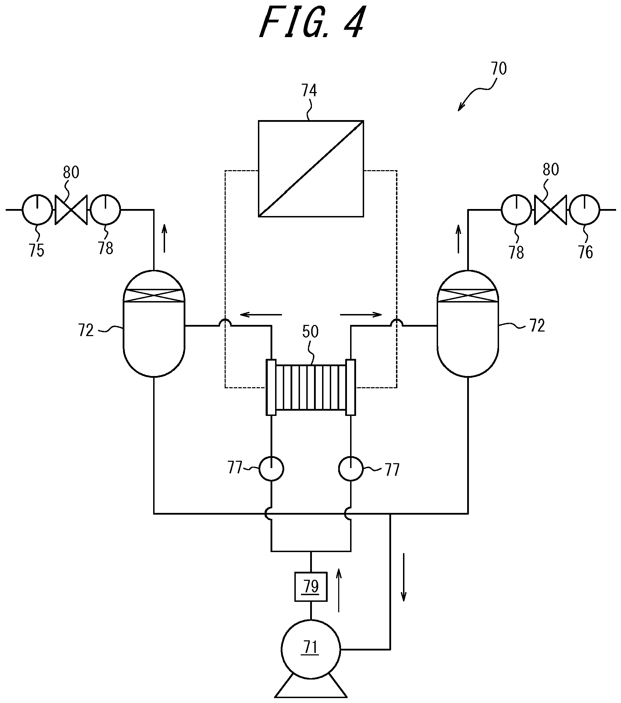

In the electrolysis device, the gas separated in each gas-liquid separation tank 72 is recovered through a pressure gauge 78, a pressure control valve 80, and an oxygen concentration meter 75 or hydrogen concentration meter 76. In addition, electric power can be controlled by a rectifier 74. In addition, flow meters 77 and a heat exchanger 79 are provided in passages of the circulating electrolyte. Arrows in FIG. 4 indicate directions in which the circulating liquid (electrolyte) and the gases flow.

In the circulation passages, a 20A SGP carbon steel plumbing system was used with those portions in contact with electrolyte having been subjected to inner surface Teflon® (Teflon is a registered trademark in Japan, other countries, or both) lining. The gas-liquid separation tanks 72 each had a height of 1,400 mm and a capacity of 1 m$^3$.

The gas-liquid separation tanks 72 each had a height of 1,400 mm and a capacity of 1 m$^3$.

The volume of liquid in each gas-liquid separation tank 72 was about 50% of the design capacity.

In the external header-type electrolyzer, external plumbing systems (anode inlet header 10ai, cathode inlet header lOci, anode outlet header 10ao, and cathode outlet header lOco) for electrolyte distribution are provided at four locations in an electrolytic frame, which is the casing of a bipolar element, as illustrated in FIG. 3. These external plumbing systems are connected via external hoses to the electrode compartments of the electrolyzer.

These plumbing structures are referred to as an external header structure. The external header plumbing systems are divided into cathode-side external header plumbing systems and anode-side external header plumbing systems.

As such, in each element, electrolyte enters the cathode compartment 5c from the cathode inlet header lOci via an external hose, and the electrolyte flows from the cathode compartment 5c to the cathode outlet header lOco via an external hose (direction indicated by solid arrow in FIG. 3). Similarly, on the anode side, electrolyte enters the anode compartment 5a from the anode inlet header 10ai via an external hose, and the electrolyte flows from the anode compartment 5a to the anode outlet header 10ao via an external hose (direction indicated by dashed arrow in FIG. 3). Since the input header of the external header is on the lower side of the electrolytic frame and the output header on the upper side, electrolyte flows from the bottom to the top. Further, it rises in a roughly perpendicular direction relative to the electrode surface. A thermocouple is installed in each external hose of each cell, and the temperature difference before and after passing through the element can be measured.

In this example, since 29 anode compartments 5a and 29 cathode compartments 5c are present, a structure is adopted in which electrolyte flows from the inlet header toward the outlet header in each of the 29 compartments. Since electrolysis produces hydrogen gas in the cathode compartment 5c and oxygen gas in the anode compartment 5a, a mixed-phase flow of electrolyte and the hydrogen gas arises in the cathode outlet header lOco and a mixed-phase flow of electrolyte and the oxygen gas arises in the anode outlet header 10ao.

Note that the arrows in FIG. 3 indicate the directions in which electrolyte flows in the element.

Current was passed through the bipolar electrolyzer 50 from the rectifier 74 under the conditions of Electrolysis Test 1 or Electrolysis Test 2, described below, with respect to the area of the cathode and the anode. The pressure in the electrolyzer after starting to pass current was measured with each pressure gauge 78 and adjusted so that the cathode-side pressure was 50 kPa and the oxygen-side pressure was 49 kPa. The pressure adjustment was carried out by installing a control valve 80 downstream of each pressure gauge 78.

In the electrolysis device, the gas separated in each gas-liquid separation tank 72 is recovered through the pressure gauge 78, the pressure control valve 80, and the oxygen concentration meter 75 or hydrogen concentration meter 76. In addition, electric power can be controlled by the rectifier 74. Flow meters 77 and a heat exchanger 79 are also provided in passages of the circulating electrolyte.

Three 75V-1000A models produced by Takasago Ltd. that were connected in parallel were used as the rectifier.

A GPR-2500 produced by Advanced Instruments, Inc. was used as the oxygen concentration meter.

An SD-D58 AC produced by Riken Keiki Co., Ltd. was used as the hydrogen concentration meter.

An EJA-118W produced by Yokogawa Electric Corporation was used as the pressure gauge.

The electrolysis device for alkaline water electrolysis was prepared using components that are typically used in the relevant technical field for the feed pump, gas-liquid separation tanks, water replenisher, and so forth.

-Electrolysis Test 1-

The electrolysis device described above was used to perform water electrolysis by continuously passing a current for 500 hours such that the current density was 6 kA/m$^2$. Once 500 hours had passed, the temperature difference of electrolyte between entering and exiting each element was measured. An average value (°C) was then calculated for each set of three electrolytic cells comprising a cathode, a membrane, and an anode of the same example or comparative example. In addition, the voltage of each electrolytic cell after 500 hours was measured, and an average value (V) for three electrolytic cells was calculated. The electrolyzer was subsequently dismantled and the state of each membrane was inspected to determine whether tearing of the membrane had occurred.

The results are shown in Table 1.

-Electrolysis Test 2-

The electrolysis device described above was used to perform water electrolysis continuously for 500 hours by passing a variable current such as to achieve a sine wave with a maximum current density of 6 kA/m$^2$, a minimum current density of 0.6 kA/m$^2$, and a period of 1,200 sec. The electrolyzer was subsequently dismantled and the state of each membrane was inspected to determine whether tearing of the membrane had occurred. The results are shown in Table 1.

The evaluation results of the examples and comparative examples are shown in Table 1.

Table 1

| | | | | Example 1 | Example 2 | Example 3 | Example 4 | Example 5 | Comparative Example 1 | Comparative Example 2 | Comparative Example 3 | Comparative Example 4 |
|---|---|---|---|---|---|---|---|---|---|---|---|---|
| Electrolytic cell | Anode | Overvoltage $\eta a$ | mV | 230 | 230 | 350 | 350 | 230 | 230 | 180 | 230 | 230 |
| | | Specific heat Ca | J/kg·K | 440 | 440 | 440 | 440 | 440 | 440 | 440 | 440 | 440 |
| | | Area density Da | kg/m$^2$ | 5 | 5 | 3.5 | 3.5 | 10 | 5 | 5 | 5 | 5 |
| | | Heat release coefficient Ha | K/sec | 0.63 | 0.63 | 1.36 | 1.36 | 0.31 | 0.63 | 0.49 | 0.63 | 0.63 |
| | | Open fraction | % | 54 | 54 | 54 | 54 | 28 | 54 | 54 | 54 | 54 |
| | Cathode | Overvoltage $\eta c$ | mV | 100 | 370 | 100 | 370 | 100 | 500 | 500 | 100 | 100 |
| | | Specific heat Cc | J/kg·K | 440 | 440 | 440 | 440 | 440 | 440 | 440 | 440 | 440 |
| | | Area density Dc | kg/m$^2$ | 0.47 | 0.47 | 0.47 | 0.47 | 10 | 0.47 | 0.47 | 0.47 | 0.47 |
| | | Heat release coefficient Hc | K/sec | 2.9 | 10.74 | 2.9 | 10.74 | 0.14 | 14.51 | 14.51 | 2.9 | 2.9 |
| | | Open fraction | % | 58 | 58 | 58 | 58 | 28 | 58 | 58 | 58 | 58 |
| | $\Delta$H | | K/sec | 2.27 | 10.11 | 1.54 | 9.37 | 0.18 | 13.88 | 14.02 | 2.27 | 2.27 |
| | $\Sigma$H | | K/sec | 3.53 | 11.36 | 4.26 | 12.1 | 0.45 | 15.13 | 15 | 3.53 | 3.53 |
| | Membrane | Thickness | $\mu$m | 580 | 580 | 580 | 580 | 580 | 580 | 580 | 500 | 50 |
| | | Linear expansion coefficient | $10^{-5}$/K | 1.93 | 1.93 | 1.93 | 1.93 | 1.93 | 1.93 | 1.93 | 5.79 | 12 |
| | | Thermal conductivity | W/m·K | 0.86 | 0.86 | 0.86 | 0.86 | 0.86 | 0.86 | 0.86 | 0.14 | 0.26 |

(continued)

| | | | | Example 1 | Example 2 | Example 3 | Example 4 | Example 5 | Comparative Example 1 | Comparative Example 2 | Comparative Example 3 | Comparative Example 4 |
|---|---|---|---|---|---|---|---|---|---|---|---|---|
| Evaluation | Electrolysis Test 1 | Average cell voltage | V | 1.75 | 2.02 | 1.95 | 2.14 | 1.85 | 2.15 | 2.1 | 1.95 | 1.9 |
| | | Number of membranes in which tearing occurred | Number | 0 | 0 | 0 | 0 | 0 | 1 | 2 | 0 | 3 |
| | | Average temperature difference between entry and exit of cell | °C | 3 | 4 | 3.7 | 4.3 | 0.4 | 3.9 | 3.7 | 2.9 | 3.1 |
| | Electrolysis Test 2 | Number of membranes in which tearing occurred | Number | 0 | 0 | 0 | 0 | 0 | 2 | 2 | 1 | 3 |

As shown in Table 1, membrane tearing did not occur in the electrolytic cells of the examples. Note that in each case in which membrane tearing occurred in the comparative examples, this tearing occurred at a contact point between the membrane and an end part of an electrode.

Moreover, the electrolytic cells of Example 1 had the lowest average cell voltage and greatest resistance to a rise in cell voltage. The average cell voltage was also low for Examples 2 to 5. The electrolytic cells of Example 5 had the smallest rise in electrolyte temperature as a result of heat generated through electrolysis.

INDUSTRIAL APPLICABILITY

According to the present disclosure, stress concentration does not tend to arise in part of a membrane of a bipolar electrolytic cell for alkaline water electrolysis having a zero-gap structure, and thus cracking and tearing of the membrane are inhibited, even when the bipolar electrolytic cell is operated under a variable power supply such as renewable energy. This enables efficient operation using renewable energy and other such power supplies.

REFERENCE SIGNS LIST

| | |
|---|---|
| 1 | partition wall |
| 2 | electrode |
| 2a | anode |
| 2c | cathode |
| 2e | elastic body |
| 2r | current collector |
| 3 | outer frame |
| 4 | membrane |
| 5 | electrode compartment |
| 5a | anode compartment |
| 5c | cathode compartment |
| 5i | electrolyte inlet |
| 5o | electrolyte outlet |
| 6 | ribs |
| 7 | gasket |
| 10 | header |
| 10o | external header |
| 10ai | anode inlet header |
| 10ao | anode outlet header |
| 10ci | cathode inlet header |
| 10co | cathode outlet header |
| 50 | bipolar electrolyzer |
| 51g | fast head, loose head |
| 51i | insulating plate |
| 51a | anode terminal element |
| 51c | cathode terminal element |
| 51r | tie rod |
| 60 | bipolar element |
| 65 | electrolytic cell |
| 70 | electrolysis device |
| 71 | feed pump |
| 72 | gas-liquid separation tank |
| 74 | rectifier |
| 75 | oxygen concentration meter |
| 76 | hydrogen concentration meter |
| 77 | flow meter |
| 78 | pressure gauge |
| 79 | heat exchanger |
| 80 | pressure control valve |
| Z | zero-gap structure |

**Claims**

1. A bipolar electrolytic cell comprising a zero-gap structure in which a plurality of elements including an anode and a cathode are stacked with a membrane interposed therebetween, and in which the membrane is in contact with the anode and the cathode, wherein
in the zero-gap structure, a heat release coefficient Ha (K/sec) of the anode defined by formula (1) and a heat release coefficient Hc (K/sec) of the cathode defined by formula (2) have a difference $\Delta H$, expressed by |Ha - Hc|, of 12 K/sec or less,

$$(1) \qquad Ha = (I \times \eta a) \div (Ca \times Da)$$

$$(2) \qquad Hc = (I \times \eta c) \div (Cc \times Dc)$$

where:

I is a current density of 6 kA/m$^2$;
$\eta$a is anode overvoltage (mV) at a current density of 6 kA/m$^2$;
$\eta$c is cathode overvoltage (mV) at a current density of 6 kA/m$^2$;
Ca is specific heat (J/kg·K) of the anode;
Cc is specific heat (J/kg·K) of the cathode;
Da is area density (kg/m$^2$) of the anode; and
Dc is area density (kg/m$^2$) of the cathode, and
the membrane has a linear expansion coefficient of not less than $0.5 \times 10^{-5}$ (1/K) and not more than $5.0 \times 10^{-5}$ (1/K).

2. A bipolar electrolytic cell for alkaline water electrolysis comprising a zero-gap structure in which a plurality of elements including an anode and a cathode are stacked with a membrane interposed therebetween, and in which the membrane is in contact with the anode and the cathode, wherein
in the zero-gap structure, a heat release coefficient Ha (K/sec) of the anode defined by formula (1) and a heat release coefficient Hc (K/sec) of the cathode defined by formula (2) have a difference $\Delta H$, expressed by |Ha - Hc|, of 12 K/sec or less,

$$(1) \qquad Ha = (I \times \eta a) \div (Ca \times Da)$$

$$(2) \qquad Hc = (I \times \eta c) \div (Cc \times Dc)$$

where:

I is a current density of 6 kA/m$^2$;
$\eta$a is anode overvoltage (mV) at a current density of 6 kA/m$^2$;
$\eta$c is cathode overvoltage (mV) at a current density of 6 kA/m$^2$;
Ca is specific heat (J/kg·K) of the anode;
Cc is specific heat (J/kg·K) of the cathode;
Da is area density (kg/m$^2$) of the anode; and
Dc is area density (kg/m$^2$) of the cathode, and
the membrane has a linear expansion coefficient of not less than $0.5 \times 10^{-5}$ (1/K) and not more than $5.0 \times 10^{-5}$ (1/K).

3. The bipolar electrolytic cell according to claim 1 or 2, wherein the heat release coefficient Ha is 2.0 K/sec or less.

4. The bipolar electrolytic cell according to any one of claims 1 to 3, wherein the heat release coefficient Hc is 5.0 K/sec or less.

5. The bipolar electrolytic cell according to any one of claims 1 to 4, wherein the heat release coefficient Ha and the heat release coefficient Hc have a sum $\sum$H, expressed by Ha + Hc, of 0.5 K/sec or more.

6. The bipolar electrolytic cell according to any one of claims 1 to 5, wherein at least one of the anode and the cathode includes a metal porous body.

7. The bipolar electrolytic cell according to any one of claims 1 to 6, wherein the anode overvoltage $\eta$a is larger than the cathode overvoltage $\eta$c.

8. The bipolar electrolytic cell according to any one of claims 1 to 7, wherein the cathode includes openings and has an open fraction of not less than 40% and not more than 70%.

9. The bipolar electrolytic cell according to any one of claims 1 to 8, wherein a surface of the cathode is coated with a layer containing at least one platinum group element selected from the group consisting of Ru, Rh, Pd, Os, Ir, and Pt.

10. The bipolar electrolytic cell according to any one of claims 1 to 9, wherein the anode includes openings and has an open fraction of not less than 30% and not more than 70%.

11. The bipolar electrolytic cell according to any one of claims 1 to 10, wherein the membrane is a porous membrane having a thickness of not less than 60 $\mu$m and not more than 600 $\mu$m.

12. The bipolar electrolytic cell according to claim 11, wherein the membrane has a thermal conductivity of not less than 0.01 W/m·K and not more than 1.0 W/m·K.

13. A bipolar electrolyzer comprising the bipolar electrolytic cell according to any one of claims 1 to 12.

14. A hydrogen production method comprising producing hydrogen through water electrolysis of water containing alkali with an electrolyzer including an electrolytic cell, wherein
the electrolytic cell has a structure in which an anode and a cathode are stacked with a membrane interposed therebetween, and in which the membrane is in contact with the anode and the cathode,
in the structure, a heat release coefficient Ha (K/sec) of the anode defined by formula (1) and a heat release coefficient Hc (K/sec) of the cathode defined by formula (2) have a difference $\Delta$H, expressed by |Ha - Hc|, of 12 K/sec or less,

$$(1) \qquad Ha = (I \times \eta a) \div (Ca \times Da)$$

$$(2) \qquad Hc = (I \times \eta c) \div (Cc \times Dc)$$

where:

I is a current density of 6 kA/m$^2$;
$\eta$a is anode overvoltage (mV) at a current density of 6 kA/m$^2$;
$\eta$c is cathode overvoltage (mV) at a current density of 6 kA/m$^2$;
Ca is specific heat (J/kg·K) of the anode;
Cc is specific heat (J/kg·K) of the cathode;
Da is area density (kg/m$^2$) of the anode; and
Dc is area density (kg/m$^2$) of the cathode, and
the membrane has a linear expansion coefficient of not less than $0.5 \times 10^{-5}$ (1/K) and not more than $5.0 \times 10^{-5}$ (1/K).

# FIG. 1

# FIG. 2

# FIG. 3

EP 3 575 444 A1

# FIG. 4

35

FIG. 5

## INTERNATIONAL SEARCH REPORT

| International application No. |
| --- |
| PCT/JP2018/002579 |

**A. CLASSIFICATION OF SUBJECT MATTER**
Int.Cl. C25B15/00(2006.01)i, C25B1/08(2006.01)i, C25B9/00(2006.01)i, C25B9/20(2006.01)i, C25B11/03(2006.01)i, C25B11/08(2006.01)i

According to International Patent Classification (IPC) or to both national classification and IPC

**B. FIELDS SEARCHED**

Minimum documentation searched (classification system followed by classification symbols)
Int.Cl. C25B15/00, C25B1/08, C25B9/00, C25B9/20, C25B11/03, C25B11/08

Documentation searched other than minimum documentation to the extent that such documents are included in the fields searched
Published examined utility model applications of Japan 1922–1996
Published unexamined utility model applications of Japan 1971–2018
Registered utility model specifications of Japan 1996–2018
Published registered utility model applications of Japan 1994–2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2013/191140 A1 (ASAHI KASEI CORPORATION) 27 December 2013 (Family: none) | 1–14 |
| A | JP 2015-183254 A (ASAHI KASEI CORPORATION) 22 October 2015 (Family: none) | 1–14 |

☐ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 06.04.2018 | 17.04.2018 |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4530743 A
- JP S59173281 A